# EUROPÄISCHE PATENTSCHRIFT

(11) **EP 4 515 317 B1**
(45) Veröffentlichungstag und Bekanntmachung des Hinweises auf die Patenterteilung: **07.10.2026**
(21) Anmeldenummer: 23720903.6
(22) Anmeldetag: 21.04.2023
(51) Int. Cl.: G02B 27/01, B60K 35/00, G02B 27/28, B32B 1/00, B60K 35/20, C03C 17/22, B32B 27/22, B32B 7/12, C03C 17/34, B32B 17/10, C03C 17/42, B60K 35/23, C03C 17/36, G02B 5/08, B32B 27/30, B32B 27/40, B60J 1/02

(54) **PROJEKTIONSANORDNUNG UMFASSEND EINE VERBUNDSCHEIBE**
PROJECTION ASSEMBLY COMPRISING A LAMINATED PANE
AGENCEMENT DE PROJECTION COMPRENANT UNE VITRE COMPOSITE

(30) Priorität: 29.04.2022 EP 22170748
(43) Veröffentlichungstag der Anmeldung: 05.03.2025
(73) Patentinhaber: Saint-Gobain Sekurit France, 60150 Thourotte (FR)
(72) Erfinder: HAGEN, Jan, 52134 Herzogenrath (DE); GOMER, Andreas, 52134 Herzogenrath (DE)
(74) Vertreter: Gebauer, Dieter Edmund
(86) Internationale Anmeldenummer: PCT/EP2023/060424
(87) Internationale Veröffentlichungsnummer: WO 2023/208763

(56) Entgegenhaltungen:
- EP-A1- 4 448 271
- EP-A1- 4 507 892
- EP-A2- 1 180 710
- WO-A1-2022/073894
- WO-A1-2023/110261
- WO-A1-2023/198500
- JP-A- S63 275 060

## Beschreibung

Die Erfindung betrifft eine Projektionsanordnung, sowie ein Verfahren zu deren Herstellung.

Im Fahrzeugbereich werden vermehrt Windschutzscheiben mit Funktionselementen eingesetzt. Dazu gehören beispielsweise Displayelemente, die eine Verwendung der Verglasung als Display ermöglichen, wobei eine Transparenz der Verglasung erhalten bleibt. Über derartige Displays kann der Fahrer eines Kraftfahrzeugs relevante Informationen unmittelbar in der Windschutzscheibe des Kraftfahrzeugs angezeigt bekommen ohne den Blick von der Straße nehmen zu müssen. Anwendungen in Bussen, Zügen oder anderen öffentlichen Verkehrsmitteln, in denen aktuelle Informationen zum Fahrtverlauf oder Werbung auf die Verglasung projiziert werden, sind ebenfalls bekannt.

Zum Anzeigen von Navigationsinformationen in Windschutzscheiben werden häufig die unter dem Begriff Head-up-Display (HUD) bekannten Projektionsanordnungen aus Projektor und Windschutzscheibe mit keilwinkelförmiger thermoplastischer Zwischenschicht und/oder keilwinkelförmigen Scheiben verwendet. Ein Keilwinkel ist dabei zur Vermeidung von Doppelbildern notwendig. Das projizierte Bild erscheint in Form eines virtuellen Bildes in einem gewissen Abstand zur Windschutzscheibe, so dass der Fahrer des Kraftfahrzeugs beispielsweise die projizierte Navigationsinformation als vor ihm auf der Straße befindlich wahrnimmt. Die Strahlung von HUD-Projektoren ist typischerweise im Wesentlichen s-polarisiert, aufgrund der besseren Reflexionscharakteristik der Windschutzscheibe im Vergleich zur p-Polarisation. Trägt der Betrachter jedoch eine polarisationsselektive Sonnenbrille, die lediglich p-polarisiertes Licht transmittiert, so wird das HUD-Bild allenfalls abgeschwächt wahrnehmen. Eine Lösung dieses Problems ist die Anwendung von Projektionsanordnungen, die p-polarisiertes Licht verwenden. DE102014220189A1 offenbart eine Head-Up-Display-Projektionsanordnung, die mit p-polarisierter Strahlung betrieben wird, wobei die Windschutzscheibe eine reflektierende Struktur aufweist, die p-polarisierte Strahlung in Richtung des Betrachters reflektiert. Auch US20040135742A1 offenbart eine Head-Up-Display-Projektionsanordnung unter Verwendung p-polarisierter Strahlung, die eine reflektierende Struktur aufweist. In WO 96/19347A3 wird als reflektierende Struktur eine mehrlagige Polymerschicht vorgeschlagen.

Ein weiteres bekanntes Konzept zur Darstellung von Informationen auf einer Scheibe ist die Integration von Displayfolien, die auf einer diffusen Reflektion basieren. Diese erzeugen ein reales Bild, das für den Betrachter in der Ebene der Verglasung erscheint. Verglasungen mit transparenten Displayfolien sind beispielsweise aus EP 2 670 594 A1 und EP 2 856 256 A1 bekannt. Die diffuse Reflektion des Displayelementes wird dabei mittels einer rauen internen Oberfläche und einer darauf befindlichen Beschichtung erzeugt. In EP 3 151 062 A1 wird eine Projektionsanordnung zur Integration in einer Automobilverglasung beschrieben.

Die Windschutzscheibe eines Kraftfahrzeugs kann somit gleichzeitig als Projektionsfläche für ein virtuelles HUD-Bild und ein auf diffuser Reflektion basierendes reales Bild genutzt werden. Diese verschiedenen Projektionstechnologien werden auch genutzt um Anzeigen wie die Geschwindigkeitsanzeige, Warnungen oder Fahrzeugdaten, die klassischerweise im Armaturenbrett eines Fahrzeugs integriert sind, in die Windschutzscheibe zu verlegen. Jedoch kann eine Vielzahl großflächiger Projektionen auf der Windschutzscheibe für den Fahrer irritierend wirken. Darüber hinaus müssen die für Head-Up-Displays verwendeten Projektoren eine entsprechend große Leistung haben um sicherzustellen, dass das projizierte Bild auch bei Gegenlicht eine ausreichende Helligkeit aufweist und vom Betrachter gut erkennbar ist. Derartige Projektoren weisen einen vergleichsweise hohen Energieverbrauch auf.

JP S63 275060 A betrifft ein magneto-optisches Aufzeichnungsmedium.

In EP 1180710 A2 ist ein Head-Up-Display-System beschrieben, das eine transparente Scheibe, ein Flüssigkristalldisplay und ein Laminat umfassend erste und zweite λ/4-Folien enthält.

WO 2022/073894 A1 offenbart eine Fahrzeugscheibe für ein Head-Up-Display umfassend mindestens eine transparente Scheibe mit einem Maskierungsstreifen in einem Randbereich der Scheibe und eine im Druckverfahren aufgebrachte Reflexionsschicht, die im Bereich des Maskierungsstreifens fahrzeuginnenraumseitig zu diesem aufgebracht ist.

Die beiden nachveröffentlichten Dokumente EP 4507892 A1 und EP 4448271 A1 offenbaren eine Projektionsanordnung mit einer Verbundscheibe und einer Lichtquelle, wobei eine Reflexionsschicht zur Reflexion des Lichts der Lichtquelle zumindest teilweise in Überdeckung mit einer opaken Abdeckschicht angeordnet ist.

Demnach besteht ein Bedarf an Projektionsanordnungen, die einen guten Kontrast des erzeugten Bildes auch bei Gegenlicht sowie einen geringen Energieverbrauch aufweisen, mit p-polarisiertem Licht betrieben werden können, eine hohe Reflektivität für p-polarisiertes Licht aufweisen. Der vorliegenden Erfindung liegt die Aufgabe zugrunde, eine solche verbesserte Projektionsanordnung und ein Verfahren zu deren Herstellung bereitzustellen.

Diese Aufgabe wird erfindungsgemäß durch eine Projektionsanordnung gemäß Anspruch 1, gelöst. Bevorzugte Ausführungsformen gehen aus den Unteransprüchen hervor.

Die erfindungsgemäße Projektionsanordnung umfasst eine Verbundscheibe sowie eine Lichtquelle für p-polarisiertes Licht. Die Verbundscheibe umfasst eine Außenscheibe mit einer außenseitigen Oberfläche (Seite I) und einer innenraumseitigen Oberfläche (Seite II), eine Innenscheibe mit einer außenseitigen Oberfläche (Seite III) und einer innenraumseitigen Oberfläche (Seite IV) und eine thermoplastische Zwischenschicht, die die innenraumseitige Oberfläche der Außenscheibe mit der außenseitigen Oberfläche der Innenscheibe verbindet.

Die Verbundscheibe weist mindestens einen ersten Teilbereich auf, in dem an der innenraumseitigen Oberfläche der Innenscheibe und/oder an der außenseitigen Oberfläche der Innenscheibe eine Reflexionsschicht angeordnet ist. Die Reflexionsschicht ist zur Reflektion p-polarisierten Lichtes geeignet und umfasst zumindest eine metallcarbid-basierte Schicht, wobei die Reflexionsschicht an der innenraumseitigen Oberfläche der Innenscheibe und/oder an der außenseitigen Oberfläche der Innenscheibe angeordnet ist.

Die Verbundscheibe weist des Weiteren mindestens eine opake Abdeckschicht in zumindest einem zweiten Teilbereich der Verbundscheibe auf, die auf der außenseitigen Oberfläche der Außenscheibe, auf der innenraumseitigen Oberfläche der Außenscheibe, auf der außenseitigen Oberfläche der Innenscheibe und/oder auf der innenraumseitigen Oberfläche der Innenscheibe angeordnet ist. Die opake Abdeckschicht kann dabei mittelbar oder unmittelbar auf der Scheibenoberfläche angeordnet sein. Der Abstand der Reflexionsschicht zur Lichtquelle der Projektionsanordnung ist dabei geringer als der Abstand der opaken Abdeckschicht zur Lichtquelle. Anders ausgedrückt ist im Einbauzustand der Projektionsanordnung in einem Fahrzeug die Reflexionsschicht innenraumseitig der opaken Abdeckschicht angeordnet, also liegt die Reflexionsschicht näher zum Fahrzeuginnenraum. Eine Projektion des ersten Teilbereichs, in dem sich die Reflexionsschicht befindet, in die Ebene des zweiten Teilbereichs ist zumindest teilweise deckungsgleich mit diesem. Die Reflexionsschicht ist demnach zumindest teilweise im Bereich der opaken Abdeckschicht angeordnet, sodass ein überlappender Bereich dieser Schichten besteht. Die Reflexionsschicht hat im Einbauzustand der Projektionsanordnung in einem Fahrzeug einen geringeren Abstand zum Fahrzeuginnenraum als die opake Abdeckschicht. Die Lichtquelle für p-polarisiertes Licht ist auf Seiten der innenraumseitigen Oberfläche der Innenscheibe angeordnet und befindet sich im Einbauzustand der Projektionsanordnung in einem Fahrzeug somit im Fahrzeuginnenraum. Demnach trifft vom Fahrzeuginnenraum ausgehendes Licht der Lichtquelle auf die Reflexionsschicht der Verbundscheibe und wird dort reflektiert. Das reflektierte Licht ist für einen im Fahrzeuginnenraum befindlichen Betrachter als Bild erkennbar. Die opake Abdeckschicht liegt vom Betrachter im Fahrzeuginnenraum aus gesehen hinter der Reflexionsschicht, sodass im Bereich der Reflexionsschicht eine Transmission von Licht aus der Umgebung in den Innenraum des Fahrzeugs vermieden wird. Dadurch weist das im Bereich der Reflexionsschicht befindliche Bild einen guten Kontrast auf.

Die Erfinder haben festgestellt, dass eine Reflexionsschicht umfassend eine metallcarbid-basierte Schicht besonders geeignet ist hinsichtlich eines im sichtbaren Bereich des Lichtspektrums glatten und intensiven Reflexionsspektrums für p-polarisiertes Licht. Im Vergleich dazu zeigen sowohl eine einzelne niedrigbrechende Schicht oder eine einzelne hochbrechende Schicht als auch eine Kombination einer niedrigbrechenden Schicht mit einer hochbrechenden Schicht eine wesentlich inhomogenere Reflexivität. Die erfindungsgemäße Reflexionsschicht umfassend eine metallcarbid-basierte Schicht erreicht dabei eine ähnlich hohe Reflektivität für p-polarisiertes Licht bei gleichzeitig glatterem Reflexionsspektrum. Die Kombination der erfindungsgemäßen Reflexionsschicht mit der, aus Sicht eines Fahrzeuginsassen dahinterliegenden, opaken Abdeckschicht bewirkt eine gute Sichtbarkeit des Bildes, auch bei äußerer Sonneneinstrahlung, bei Insassen mit Sonnenbrillen und bei Verwendung lichtschwacher Lichtquellen. Auch unter diesen Umständen erscheint das von der Lichtquelle erzeugte Bild hell und ist ausgezeichnet erkennbar. Dies ermöglicht eine Reduktion der Leistung der Lichtquelle und somit einen verminderten Energieverbrauch. Ferner weisen metallcarbid-basierte Schichten eine hohe Härte und eine hohe chemische Beständigkeit auf, sodass die Reflexionsbeschichtung eine gute Beständigkeit gegen mechanische Beschädigungen sowie äußere Umwelteinflüsse aufweist. Dies ist vorteilhaft hinsichtlich der Beständigkeit während des Herstellungsprozesses der Scheibe sowie je nach Anordnung der Reflexionsschicht auch in Einbaulage.

Bevorzugt ist die Reflexionsschicht so auf der innenraumseitigen Oberfläche der Innenscheibe angeordnet, dass sie eine exponierte, also die unmittelbar an die Umgebung grenzende Oberfläche der Verbundscheibe bildet. Anders ausgedrückt bildet die Reflexionsschicht die von der thermoplastischen Zwischenschicht ausgehend in Richtung der Innenscheibe am weitesten entfernte Schicht. Dies ist vorteilhaft um ein besonders intensives Reflexionsspektrum zu erreichen. Reflexionsschichten mit metallcarbid-basierten Schichten ermöglichen durch ihre hohe mechanische und chemische Beständigkeit eine lange Lebensdauer der Reflexionsschicht auch bei Verwendung an exponierten Oberflächen.

Aus Sicht eines Fahrzeuginsassen ist die Reflexionsschicht in Durchsicht durch die Innenscheibe räumlich vor der opaken Abdeckschicht angeordnet. Der Bereich der Verbundscheibe, in dem die Reflexionsschicht angeordnet ist, wirkt dadurch opak. Die Reflexionsschicht vor dem opaken Hintergrund ist vorzugsweise transparent, kann jedoch auch selbst opak sein. Der Ausdruck "in Durchsicht durch die Verbundscheibe" bedeutet, dass durch die Verbundscheibe geblickt wird, ausgehend von der innenraumseitigen Oberfläche der Innenscheibe. Im Sinne der vorliegenden Erfindung bedeutet "räumlich vor", dass die Reflexionsschicht räumlich weiter entfernt von der außenseitigen Oberfläche der Außenscheibe angeordnet ist als zumindest die opake Abdeckschicht. Die opake Abdeckschicht kann auf einer oder mehreren Scheibenoberflächen aufgebracht sein. Ein Vorteil der Erfindung ist diesbezüglich, dass die Reflexionsschicht geeignet ist um auf der innenraumseitigen Oberfläche der Innenscheibe frei exponiert angebracht zu werden. Somit kann die Oberfläche, auf der die opake Abdeckschicht platziert werden soll frei nach Kundenwünschen ausgewählt werden. Im Gegensatz dazu könnte eine auf der außenseitigen Oberfläche der Innenscheibe oder der innenraumseitigen Oberfläche der Außenscheibe angebrachte Reflexionsschicht durch einen weiter in Richtung des Fahrzeuginnenraums liegenden Abdeckdruck verdeckt werden. Wenn die opake Abdeckschicht auf der innenraumseitigen Oberfläche der Innenscheibe angeordnet wird, so ist die Reflexionsschicht auf der der Innenscheibe abgewandten Oberfläche der opaken Abdeckschicht angebracht und wird somit in ihrer Funktion nicht von der Abdeckschicht beeinträchtigt. Die Reflexionsschicht kann dabei mittelbar oder unmittelbar, bevorzugt unmittelbar, auf der opaken Abdeckschicht aufgebracht sein. Bevorzugt ist die opake Abdeckschicht zumindest in dem Bereich verbreitert, der mit der Reflexionsschicht überlappt und in dem die Verbundscheibe zur Darstellung von Bildern genutzt wird. Dies bedeutet, dass die opake Abdeckschicht senkrecht zum nächstliegenden Abschnitt der umlaufenden Kante der Verbundscheibe betrachtet eine größere Breite aufweist als in anderen Abschnitten. Die opake Abdeckschicht kann auf diese Weise an die Abmessungen der Reflexionsschicht angepasst werden. Die opake Abdeckschicht ist bevorzugt im Randbereich der Verbundscheibe umlaufend entlang der umlaufenden Kante der Verbundscheibe ausgebildet, wobei die Breite der Abdeckschicht variiert.

Unter einer exponierten Oberfläche wird im Sinne der Erfindung eine Oberfläche verstanden, die zugänglich ist und direkten Kontakt zur umgebenden Atmosphäre hat. Sie kann auch als externe Oberfläche bezeichnet werden. Eine exponierte Oberfläche ist zu unterscheiden von internen Oberflächen einer Verbundscheibe, die über die thermoplastische Zwischenschicht miteinander verbunden sind. Ist die Scheibe als Verbundscheibe ausgebildet, so sind die außenseitige Oberfläche der Außenscheibe und die innenraumseitige Oberfläche der Innenscheibe (also des erfindungsgemäßen Substrats) exponiert.

Flächig übereinander angeordnet bedeutet, dass die Projektion einer ersten Schicht in die Ebene einer zweiten Schicht zumindest teilweise deckungsgleich mit der zweiten Schicht ist.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen, beispielsweise Dotierungen mit Aluminium, Zirkonium, Titan, Hafnium oder Bor.

Die metallcarbid-basierte Schicht besteht mehrheitlich aus einem oder mehreren Metallcarbiden, bevorzugt mehrheitlich aus einem Metallcarbid. Metallcarbide weisen eine gute elektrische Leitfähigkeit und eine hohe mechanische sowie chemische Stabilität auf. Als besonders geeignet haben sich Übergangsmetallcarbide erwiesen.

Die Erfinder haben festgestellt, dass Legierungen der metallcarbid-basierten Schicht mit Aluminium, Silizium und/oder Übergangsmetallen, bevorzugt Titan, Zirkonium und/oder Hafnium, vorteilhaft sind um die mechanische sowie chemische Stabilität der Reflexionsschicht weiter zu erhöhen. Bevorzugt ist die metallcarbid-basierte Schicht mit höchstens 49%, besonders bevorzugt mit höchstens 30%, insbesondere mit höchstens 20% eines oder mehrerer der genannten Materialien legiert. Je nach Materialauswahl und Anteil der Legierungsbestandteile kann die elektrische Leitfähigkeit der metallcarbid-basierten Schicht dadurch allerdings verschlechtert werden. In der Praxis wird dabei eine Abwägung getroffen zwischen erwünschter Stabilität und Leitfähigkeit, wobei hinsichtlich der benötigten Stabilität die Position der Reflexionsschicht an einer exponierten oder nicht exponierten Oberfläche in Betracht gezogen wird.

Bevorzugt liegt der elektrische Schichtwiderstand der metallcarbid-basierten Schicht zwischen 20 µΩ·cm und 200 µΩ·cm, besonders bevorzugt zwischen 50 µΩ·cm und 100 µΩ·cm, insbesondere zwischen 50 µΩ·cm und 80 µΩ·cm, und die Vickers Härte, gemessen nach DIN EN ISO 6507 Teil 1-4, zwischen 10 GPa und 40 GaPa. Metallcarbid-basierte Schichten mit diesen Leitfähigkeiten und Härten weisen eine besonders hohe Reflektivität für p-polarisiertes Licht und sehr gute mechanische Stabilität auf.

Vorzugsweise ist die Verbundscheibe eine Fahrzeug-Windschutzscheibe.

Die mindestens eine opake Abdeckschicht im Sinne der Erfindung ist eine Schicht, die die Durchsicht durch die Verbundscheibe verhindert. Dabei findet eine Transmission von höchstens 5 %, bevorzugt von höchstens 2 %, besonders bevorzugt von höchstens 1 %, insbesondere von höchstens 0,1 %, des Lichtes des sichtbaren Spektrums durch die opake Abdeckschicht statt.

Die Lichtquelle der Projektionsanordnung strahlt p-polarisiertes Licht aus und ist so in Nachbarschaft zur innenraumseitigen Oberfläche der Innenscheibe angeordnet, dass die Lichtquelle diese Oberfläche bestrahlt, wobei das Licht von der Reflexionsschicht der Verbundscheibe reflektiert wird. Bevorzugt reflektiert die Reflexionsschicht mindestens 5 %, bevorzugt mindestens 6 %, besonders bevorzugt mindestens 10 % des auf die Reflexionsschicht auftreffenden p-polarisierten Lichtes in einem Wellenlängenbereich von 450 nm bis 650 nm und Einstrahlwinkeln von 55° bis 75°. Dies ist vorteilhaft um eine möglichst große Helligkeit eines von der Lichtquelle ausgestrahlten und an der Reflexionsschicht reflektierten Bildes zu erreichen.

Die Lichtquelle dient der Ausstrahlung eines Bildes, kann also auch als Anzeigevorrichtung oder Bildanzeigevorrichtung bezeichnet werden. Als Lichtquelle kann ein Projektor, ein Display oder auch eine andere dem Fachmann bekannte Vorrichtung verwendet werden. Bevorzugt ist die Lichtquelle ein Display, besonders bevorzugt ein LCD-Display, LED-Display, OLED-Display oder elektrolumineszentes Display, insbesondere ein LCD-Display. Displays weisen eine geringe Einbauhöhe auf und sind so einfach und platzsparend in das Armaturenbrett eines Fahrzeugs zu integrieren. Darüber hinaus sind Displays im Vergleich zu Projektoren wesentlich energiesparender zu betreiben. Die vergleichsweise geringere Helligkeit von Displays ist dabei in Kombination mit der erfindungsgemäßen Reflexionsschicht und der dahinterliegenden opaken Abdeckschicht völlig ausreichend. Die Strahlung der Lichtquelle trifft vorzugsweise mit einem Einfallswinkel von 55° bis 80° auf die Verbundscheibe, bevorzugt von 62° bis 77° auf die Verbundscheibe im Bereich der Reflexionsschicht. Der Einfallswinkel ist der Winkel zwischen dem Einfallsvektor der Strahlung der Bildanzeigevorrichtung und der Flächennormale im geometrischen Zentrum der Reflexionsschicht.

Mit dem Begriff p-polarisiertes Licht ist Licht des sichtbaren Spektrums gemeint, das mehrheitlich eine p-Polarisation aufweist. Das p-polarisierte Licht hat vorzugsweise einen Lichtanteil mit p-Polarisation von mindestens 50 %, bevorzugt von mindestens 70 %, besonders bevorzugt von mindestens 90 % und insbesondere von etwa 100%. Die Betrachtung der Polarisationsrichtung erfolgt dabei bezogen auf die Einfallsebene der Strahlung auf der Verbundscheibe. Als p-polarisierte Strahlung wird eine Strahlung bezeichnet, deren elektrisches Feld in der Einfallsebene schwingt. Als s-polarisierte Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt. Anders ausgedrückt die Polarisation, also insbesondere der Anteil an p- und s-polarisierter Strahlung, wird an einem Punkt des von der Lichtquelle bestrahlten Bereichs bestimmt, bevorzugt im geometrischen Zentrum des bestrahlten Bereichs. Da Verbundscheiben gekrümmt sein können (beispielweise, wenn sie als Windschutzscheibe ausgebildet sind), was Auswirkungen auf die Einfallsebene der Strahlung hat, können in den übrigen Bereichen leicht davon abweichende Polarisationsanteile auftreten, was aus physikalischen Gründen unvermeidlich ist.

Bevorzugt liegt die die Projektion des ersten Teilbereichs, in dem die Reflexionsschicht aufgetragen ist, in die Ebene des zweiten Teilbereichs, in dem die Abdeckschicht angeordnet ist, vollständig innerhalb des zweiten Teilbereichs. Anders ausgedrückt ist die Reflexionsschicht vorzugsweise ausschließlich im Bereich des Abdeckdrucks angebracht und ragt nicht über diesen hinaus. Dies ist vorteilhaft um die Reflexionsschicht lediglich auf die Bereiche zu begrenzen, in denen sie der Projektion eines Bildes dient und gleichzeitig den Durchsichtbereich der Windschutzscheibe frei von der Reflexionsschicht zu halten. Auf diese Weise kann die Reflexionsschicht eine geringere Lichttransmission aufweisen als sie im Sichtbereich der Windschutzscheibe nach gesetzlichen Anforderungen notwendig ist.

Bevorzugt ist mindestens eine opake Abdeckschicht in einem Randbereich der Außenscheibe angeordnet. Eine solche Abdeckschicht dient vorzugsweise der Maskierung einer Verklebung der Verbundscheibe, beispielsweise als Windschutzscheibe in eine Fahrzeugkarosserie. Dadurch wird ein harmonischer Gesamteindruck der Verbundscheibe im Einbauzustand erzielt. Des Weiteren dient der opake Abdeckdruck als UV-Schutz für das verwendete Klebematerial.

Eine auf der Außenscheibe oder Innenscheibe befindliche opake Abdeckschicht wird bevorzugt im Siebdruckverfahren aufgedruckt. Siebdruckverfahren zur Aufbringung opaker Abdeckschichten auf Scheiben sind als solche bekannt. Derartige aufgedruckte Abdeckschichten werden auch als Siebdruck, Schwarzdruck oder *black print* bezeichnet und enthalten ein opakes Pigment, beispielsweise ein Schwarzpigment. Bekannte Schwarzpigmente sind beispielsweise Pigmentruß (*Carbon Black*), Anilinschwarz, Beinschwarz, Eisenoxidschwarz, Spinellschwarz sowie Graphit. Eine im Siebdruckverfahren aufgedruckte opake Abdeckschicht wird vorzugsweise einer Temperaturbehandlung unterzogen um diese dauerhaft mit der Glasoberfläche zu verbinden. Die Temperaturbehandlung wird typischerweise bei Temperaturen im Bereich von 450°C bis 700°C durchgeführt. Ist die Außenscheibe gebogen, so kann die Temperaturbehandlung eines darauf aufzubringenden Siebdrucks auch beim Biegen der Scheibe erfolgen.

Eine opake Abdeckschicht auf der Außenscheibe kann auf der innenraumseitigen Oberfläche der Außenscheibe und/oder auf der außenseitigen Oberfläche der Außenscheibe aufgebracht sein. Dabei ist die innenraumseitige Oberfläche der Außenscheibe insofern bevorzugt, dass der opake Abdeckdruck vor Witterungseinflüssen geschützt ist. Besonders bevorzugt ist mindestens eine opake Abdeckschicht in Form eines opaken Abdeckdrucks auf der innenraumseitigen Oberfläche der Außenscheibe und/oder der außenseitigen Oberfläche der Innenscheibe angeordnet. Ein auf der außenseitigen Oberfläche der Innenscheibe angebrachter opaker Abdeckdruck kaschiert auch den Blick aus dem Fahrzeuginneren durch die Verbundscheibe nach draußen. Dabei können beispielsweise in der Verbundscheibe einlaminierte Komponenten, wie elektrische Anschlüsse, kaschiert werden. Auch kundenseitig besteht der Wunsch die Position des Abdeckdrucks frei wählen zu können und diesen bei Bedarf auch auf der innenraumseitigen Oberfläche oder außenseitigen Oberfläche der Innenscheibe anbringen zu können. Die auf der innenraumseitigen Oberfläche der Innenscheibe unmittelbar angrenzend an die Umgebung angeordnete Reflexionsschicht ermöglicht dabei, im Gegensatz zu Schichten, die nur für eine innenliegende Verwendung in der Verbundscheibe geeignet sind, eine Kombination mit Abdeckschichten auf beliebigen Oberflächen der Innenscheibe.

Die Reflexionsschicht ist bevorzugt auf einen Teilbereich der innenraumseitigen Oberfläche der Innenscheibe aufgebracht. Die Reflexionsschicht ist bevorzugt in unmittelbarem Kontakt mit der innenraumseitigen Oberfläche der Innenscheibe (Seite IV) oder alternativ einer auf dieser Scheibenoberfläche aufgetragenen opaken Abdeckschicht. Die Reflexionsschicht ist dabei mindestens in einem Bereich auf der Seite IV der Verbundscheibe angeordnet, der in Durchsicht durch die Verbundscheibe in Überlappung mit der opaken Abdeckschicht ist. Das bedeutet, dass das p-polarisierte Licht, das von der Lichtquelle auf die Reflexionsschicht projiziert wird, in dem Bereich auf die Verbundscheibe trifft, in dem die opake Abdeckschicht liegt. Dadurch wird ein hoher Kontrast der Darstellung erreicht.

Die metallcarbid-basierte Schicht enthält mindestens 95 Gewichtsprozent eines oder mehrerer Metallcarbide, bevorzugt mindestens 97 Gewichtsprozent eines oder mehrerer Metallcarbide. Dadurch ergibt sich eine gute elektrische Leitfähigkeit, die mit guten Reflexionseigenschaften für p-polarisiertes Licht einhergeht. Bevorzugt enthält die metallcarbid-basierte Schicht mindestens 95 Gewichtsprozent eines Metallcarbids. Die metallcarbidbasierte Schicht enthält Chromcarbid, Titancarbid, Zirkoniumcarbid, Hafniumcarbid, Molybdäncarbid und/oder Wolframcarbid, insbesondere Chromcarbid oder Titancarbid. Chromcarbid und Titancarbid haben sich hinsichtlich ihrer guten Verfügbarkeit, hohen Härte, Beständigkeit und Leitfähigkeit und einfachen Abscheidbarkeit als besonders vorteilhaft erwiesen. Besonders bevorzugt besteht die metallcarbid-basierte Schicht neben etwaigen Verunreinigungen im Wesentlichen aus einem der genannten Metallcarbide, insbesondere Chromcarbid oder Titancarbid.

Die metallcarbid-basierte Schicht weist bevorzugt eine Dicke von 10 nm bis 100 nm, besonders bevorzugt 15 nm bis 70 nm, insbesondere 20 nm bis 50 nm auf. In diesen Bereichen konnten besonders gute Reflexions- und mechanische Eigenschaften erreicht werden, wobei die Schicht dünn genug ist um kostengünstig abgeschieden zu werden.

In einer bevorzugten Ausführungsform besteht die Reflexionsschicht aus einer einzelnen metallcarbid-basierten Schicht und umfasst keine weiteren Schichten. Dies ist vorteilhaft um eine einfach herstellbare kostengünstige Reflexionsschicht bereitzustellen. Soll die Reflexionsschicht auf der außenseitigen Oberfläche der Innenscheibe angebracht werden, so besteht diese vorzugsweise aus einer einzelnen metallcarbid-basierten Schicht. Aber auch in Bezug auf Reflexionsschichten, die auf der innenraumseitigen Oberfläche der Innenscheibe angeordnet sind, ist die hohe mechanische Stabilität der metallcarbid-basierten Schicht entscheidend um derartige Ausführungen zu ermöglichen.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. In Bezug auf die Reflexionsschicht dient die Innenscheibe als Substrat, wobei die Reflexionsschicht auf der innenraumseitigen Oberfläche der Innenscheibe aufgebracht ist. Somit ist eine oberhalb der metallcarbid-basierten Schicht angebrachte zweite Schicht weiter von der innenraumseitigen Oberfläche der Innenscheibe entfernt als die metallcarbid-basierte Schicht.

In einer weiteren bevorzugten Ausführungsform umfasst die Reflexionsschicht mindestens eine metallcarbid-basierte Schicht und eine dielektrische Schicht, wobei die dielektrische Schicht oberhalb der metallcarbid-basierten Schicht angebracht ist. Bevorzugt ist eine solche Reflexionsschicht auf der innenraumseitigen Oberfläche der Innenscheibe angebracht. Somit ergibt sich ein Schichtstapel aus ausgehend von der innenraumseitigen Oberfläche der Innenscheibe in dieser Reihenfolge flächig übereinander angeordnet mindestens einer metallcarbid-basierten Schicht und einer dielektrischen Schicht. Eine dielektrische Schicht oberhalb der metallcarbid-basierten Schicht ist vorteilhaft um die metallcarbid-basierte Schicht vor mechanischer Beanspruchung zu schützen. Ferner wirkt die dielektrische Schicht als Barriereschicht, die auch die chemische Beständigkeit der metallcarbid-basierten Schicht weiter erhöht. Besonders bevorzugt umfasst die Reflexionsbeschichtung genau eine dielektrische Schicht.

Die mindestens eine dielektrische Schicht wird bevorzugt als optisch niedrigbrechende Schicht mit einem Brechungsindex von kleiner als 1,6, bevorzugt höchstens 1,5, besonders bevorzugt höchstens 1,45, beispielsweise 1,25 bis 1,35 ausgeführt. Diese Werte haben sich als besonders vorteilhaft hinsichtlich der Reflexionseigenschaften der Scheibe erwiesen.

Brechungsindizes sind im Rahmen der vorliegenden Erfindung grundsätzlich bezogen auf eine Wellenlänge von 550 nm angegeben. Methoden zur Bestimmung von Brechungsindizes sind dem Fachmann bekannt. Die im Rahmen der Erfindung angegebenen Brechungsindizes sind beispielsweise mittels Ellipsometrie bestimmbar, wobei kommerziell erhältliche Ellipsometer eingesetzt werden können. Die Angabe von Schichtdicken oder Dicken bezieht sich, sofern nicht anders angegeben, auf die geometrische Dicke einer Schicht.

Die niedrigbrechende Schicht ist bevorzugt auf Basis von Siliziumoxid ausgebildet. Ist eine Schicht aus Siliziumoxid oberhalb der metallcarbid-basierten Schicht angebracht, so kann eine weitere wesentliche Verbesserung der Gesamtreflexion der Reflexionsschicht beobachtet werden. Die Reflexionseigenschaften der Schicht werden einerseits durch den Brechungsindex und andererseits durch die Dicke der niedrigbrechenden Schicht bestimmt. In einer bevorzugten Ausgestaltung beträgt der Brechungsindex der niedrigbrechenden Schicht von 1,2 bis 1,4, besonders bevorzugt von 1,25 bis 1,35. Ein Brechungsindex in diesen Bereichen ist besonders vorteilhaft um ein homogenes Reflexionsspektrum im Bereich von Einstrahlwinkeln um 65° sowie um 75° zu erreichen. Die Dicke der niedrigbrechenden Schicht beträgt bevorzugt von 50 nm bis 200 nm, besonders bevorzugt von 100 nm bis 150 nm. Damit werden gute Reflexionseigenschaften erreicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen. Die genannten Oxide und Nitride können stöchiometrisch, unterstöchiometrisch oder überstöchiometrisch abgeschieden sein (auch wenn zum besseren Verständnis eine stöchiometrische Summenformal angegeben ist). Sie können Dotierungen aufweisen, beispielsweise Aluminium, Zirkonium, Hafnium, Titan oder Bor.

Das Siliziumoxid kann dotiert sein, beispielsweise mit Aluminium, Zirkonium, Titan, Bor, Zinn oder Zink. Durch Dotierungen können insbesondere die optischen, mechanischen und chemischen Eigenschaften der Beschichtung angepasst werden.

Die niedrigbrechende Schicht umfasst bevorzugt nur eine homogene Schicht aus Siliziumoxid. Es ist aber auch möglich, die niedrigbrechende Schicht aus mehreren Schichten von Siliziumoxid auszubilden. Beispielsweise können mehrere Schichten aus nanoporösem Siliziumoxid abgeschieden werden, die sich hinsichtlich der Porosität (Größe und/oder Dichte der Poren) unterscheiden. So kann gleichsam ein Verlauf von Brechungsindizes erzeugt werden.

Die optisch niedrigbrechende Schicht ist bevorzugt durch physikalische oder chemische Gasphasenabscheidung, also eine PVD- oder CVD-Verfahren (PVD: *physical vapour deposition, CVD: chemical vapour deposition*) aufgebracht. Besonders bevorzugt ist die niedrigbrechende Schicht eine durch Kathodenzerstäubung aufgebrachte ("aufgesputterte") Beschichtung, insbesondere eine durch magnetfeldunterstütze Kathodenzerstäubung aufgebrachte ("magnetron-aufgesputterte") Beschichtung. Dies hat den Vorteil, dass sowohl die metallcarbid-basierte Schicht als auch die niedrigbrechende Schicht mit dem gleichen Verfahren abgeschieden werden können.

In einer weiteren möglichen Ausführungsform ist die niedrigbrechende Schicht eine Sol-Gel-Beschichtung. Vorteile des Sol-Gel-Verfahrens als nasschemisches Verfahren ist eine hohe Flexibilität, die es beispielsweise auf einfache Weise erlaubt, nur Teile der Scheibenoberfläche mit der Beschichtung zu versehen, und geringe Kosten im Vergleich zu Gasphasenabscheidungen wie der Kathodenzerstäubung.

Beim Sol-Gel-Verfahren wird zunächst ein Sol, welches die Präkursoren der Beschichtung enthält bereitgestellt und gereift. Die Reifung kann eine Hydrolyse der Präkursoren beinhalten und/oder eine (partielle) Reaktion zwischen den Präkursoren. Die Präkursoren liegen üblicherweise in einem Lösungsmittel vor, bevorzugt Wasser, Alkohol (insbesondere Ethanol) oder ein Wasser-Alkohol-Gemisch.

Die niedrigbrechende Schicht wird in einer möglichen Ausführungsform in einem Sol-Gel-Prozess auf der metallcarbid-basierten Schicht abgeschieden. Zunächst wird ein Sol, welches die Präkursoren der Beschichtung enthält, bereitgestellt und gereift. Die Reifung kann eine Hydrolyse der Präkursoren beinhalten und/oder eine (partielle) Reaktion zwischen den Präkursoren. Dieses Sol wird im Sinne der Erfindung als Präkursoren-Sol bezeichnet und enthält Siliziumoxid-Präkursoren in einem Lösungsmittel. Die Präkursoren sind bevorzugt Silane, insbesondere Tetraethoxy-Silane oder Methyltriethoxysilan (MTEOS). Alternativ können aber auch Silikate als Präkursoren eingesetzt werden, insbesondere Natrium-, Lithium- oder Kaliumsilikate, beispielsweise Tetramethylorthosilikat, Tetraethylorthosilikat (TEOS), Tetraisopropylorthosilikat, oder Organosilane der allgemeinen Form R²ₙSi(OR¹)₄₋ₙ. Dabei ist bevorzugt R¹ eine Alkylgruppe, R² eine Alkyl-, Epoxy-, Acrylat-, Methacrylat-, Amin-, Phenyl- oder Vinylgruppe, und n eine ganze Zahl von 0 bis 2. Es können auch Silizium-halogenide oder -alkoxide eingesetzt werden. Das Lösungsmittel ist bevorzugt Wasser, Alkohol (insbesondere Ethanol) oder ein Wasser-Alkohol-Gemisch.

Das Präkursoren-Sol wird dann mit einem Porenformer vermischt, der ein einer wässrigen Phase dispergiert ist. Aufgabe des Porenformers ist es, gleichsam als Platzhalter bei der Erzeugung der niedrigbrechenden Schicht die Poren in der Siliziumoxidmatrix zu erzeugen. Durch Form, Größe und Konzentration des Porenformers werden Form, Größe und Dichte der Poren bestimmt. Durch den Porenformer können Porengröße, Porenverteilung und Porendichte gezielt gesteuert werden und es werden reproduzierbare Ergebnisse sichergestellt. Als Porenformer können beispielsweise Polymer-Nanopartikel eingesetzt werden, bevorzugt PMMA-Nanopartikel (Polymethylmethacrylat), alternativ aber auch Nanopartikel aus Polycarbonaten, Polyestern oder Polystyrolen, oder Copolymeren aus Methyl(meth)acrylaten und (Meth)acrylsäure. Anstatt Polymer-Nanopartikeln können auch Nanotropfen eines Öls in Form einer Nanoemulsion verwendet werden. Natürlich ist es auch denkbar, verschiedene Porenformer einzusetzen.

Das Sol wird auf die innenraumseitige Oberfläche der Innenscheibe mittelbar oder unmittelbar aufgebracht, insbesondere durch nasschemische Verfahren, beispielsweise durch Tauchbeschichtung (*dip coating*), Schleuderbeschichtung (*spin coating*), Flutbeschichtung (*flow coating*), durch Auftragen mittels Rollen oder Pinseln oder durch Sprühbeschichtung (*spray coating*), oder durch Druckverfahren, beispielsweise durch Tampondruck (*pad printing*) oder Siebdruck (*screen printing*)*.* Im Anschluss kann eine Trocknung erfolgen, wobei Lösungsmittel verdampft wird. Diese Trocknung kann bei Umgebungstemperatur oder durch gesonderte Beheizung erfolgen (beispielsweise mit einer Temperatur bis zu 120 °C). Vor dem Aufbringen der Schicht auf das Substrat wird die Oberfläche typischerweise gereinigt durch an sich bekannte Verfahren.

Anschließend wird das Sol kondensiert. Dabei bildet sich die Siliziumoxid-Matrix um die Porenformer aus. Die Kondensation kann eine Temperaturbehandlung umfassen, beispielsweise bei einer Temperatur von beispielsweise bis zu 350 °C. Weisen die Präkursoren UV-vernetzbare funktionelle Gruppen auf (beispielsweise Methacrylat-, Vinyl-oder Acrylatgruppe), so kann die Kondensation eine UV-Behandlung umfassen. Die Kondensation kann alternativ bei geeigneten Präkursoren (beispielsweise Silikate) eine IR-Behandlung umfassen. Optional kann Lösungsmittel bei einer Temperatur von bis zu 120 °C verdampft werden.

Dann wird der Porenformer optional wieder entfernt. Dazu wird das beschichtete Substrat bevorzugt einer Hitzebehandlung bei einer Temperatur von mindestens 400 °C unterzogen, bevorzugt mindestens 500 °C, wobei sich die Porenformer zersetzen. Organische Porenformer werden dabei insbesondere verkohlt (karbonisiert). Die Hitzebehandlung kann im Rahmen eines Biegeprozesses oder thermischen Vorspannprozesses erfolgen. Die Hitzebehandlung wird bevorzugt über einen Zeitraum von höchstens 15 min durchgeführt, besonders bevorzugt höchstens 5 min. Neben der Entfernung der Porenformer kann die Hitzebehandlung auch dazu dienen, die Kondensation zu komplettieren und die Beschichtung dadurch zu verdichten, was ihre mechanischen Eigenschaften verbessert, insbesondere ihre Stabilität.

Statt mittels der Hitzebehandlung kann der Porenformer auch durch Lösungsmittel aus der Beschichtung herausgelöst werden. Im Falle von Polymer-Nanopartikeln muss das entsprechende Polymer in dem Lösungsmittel löslich sein, beispielweise kann im Falle von PMMA-Nanopartikeln Tetrahydrofuran (THF) verwendet werden.

Das Entfernen des Porenformers ist bevorzugt, wodurch leere Poren erzeugt werden. Prinzipiell ist es aber auch möglich, den Porenformer in den Poren zu belassen. Sofern er einen anderen Brechungsindex aufweist als das Siliziumoxid, wird dieser dadurch beeinflusst. Die Poren sind dann mit dem Porenformer gefüllt, beispielsweise mit PMMA-Nanopartikeln. Es können auch hohle Partikel als Porenformer verwendet werden, beispielsweise hohle Polymernanopartikel wie PMMA-Nanopartikel oder hohle Siliziumoxid-Nanopartikel. Wird ein solcher Porenformer in den Poren belassen und nicht entfernt, so weisen die Poren einen hohlen Kern und einen mit dem Porenformer gefüllten Randbereich auf.

Das beschriebene Sol-Gel-Verfahren ermöglicht die Herstellung einer niedrigbrechenden Schicht mit einer regelmäßigen, homogenen Verteilung der Poren. Die Porenform, -größe und -dichte können gezielt eingestellt werden und die niedrigbrechende Schicht weist eine geringe Tortuosität auf.

Optional umfasst eine an der innenraumseitigen Oberfläche der Innenscheibe angebrachte Reflexionsbeschichtung eine organische Schutzschicht, die im Einbauzustand der Projektionsanordnung in einem Fahrzeug dem Fahrzeuginnenraum zugewandt ist. Die organische Schutzschicht trägt nicht oder nur unwesentlich zu den optischen Eigenschaften der Reflexionsbeschichtung bei, sondern schützt die darunterliegenden Schichten der Reflexionsbeschichtung gegen Verschmutzung. Bevorzugt handelt es sich bei der organischen Schutzschicht um eine hydrophobe Beschichtung. Geeignete hydrophobe Beschichtungen sind kommerziell erhältlich, beispielsweise fluororganische Verbindungen, wie sie auch die DE19848591 beschreibt. Bekannte hydrophobe Beschichtungen sind beispielsweise Produkte auf Basis von Perfluorpolyethern oder Fluorsilanen. Hierbei handelt es sich beispielsweise um flüssig aufgebrachte Schichten, beispielsweise durch Sprühen, Tauchen und Fluten oder durch Auftrag mittels eines Tuchs. Alternativ sind hydrophobe Filme als Nanoschichtsysteme verfügbar, welche beispielsweise mittels chemischer oder physikalischer Gasphasenabscheidung aufgetragen werden.

Bevorzugt ist die dielektrische Schicht unmittelbar auf der metallcarbid-basierten Schicht abgeschieden, das heißt es sind keine weiteren Schichten zwischen der metallcarbid-basierten Schicht und der dielektrischen Schicht angeordnet.

In einer besonders bevorzugten Ausführungsform besteht die Reflexionsschicht aus genau einer metallcarbid-basierten Schicht. In einer weiteren besonders bevorzugten Ausführungsform besteht die Reflexionsschicht aus einer metallcarbid-basierten Schicht und einer oberhalb der metallcarbid-basierten Schicht angebrachten organischen Schutzschicht. In einer weiteren besonders bevorzugten Ausführungsform besteht die Reflexionsschicht aus einem Schichtstapel aus in dieser Reihenfolge ausgehend von der innenraumseitigen Oberfläche der Innenscheibe einer metallcarbid-basierten Schicht, einer dielektrischen Schicht und einer organischen Schutzschicht.

Besonders bevorzugt besteht die Reflexionsbeschichtung aus genau einer einzelnen metallcarbid-basierten Schicht, genau einer einzelnen dielektrischen Schicht, optional einer organischen Schutzschicht und weist keine weiteren Schichten unterhalb oder oberhalb dieser Schichten auf. Die Erfinder haben festgestellt, dass eine solche Reflexionsbeschichtung ein homogeneres Reflexionsspektrum für p-polarisiertes Licht aufweist.

Um eine möglichst farbneutrale Darstellung des im Bereich der Reflexionsschicht erzeugten Bildes zu erreichen, sollte das Reflexionsspektrum gegenüber p-polarisierter Strahlung möglichst glatt sein und keine ausgeprägten lokalen Minima und Maxima ausweisen. Vorzugsweise sollte im Spektralbereich von 450 nm bis 650 nm die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades höchstens 3 % betragen, besonders bevorzugt höchstens 2 %. Die abgegebene Differenz ist als absolute Abweichung des Reflexionsgrades (angegeben in %) zu verstehen, nicht als prozentuale Abweichung relativ zum Mittelwert. Als Maß für die Glätte des Reflexionsspektrums kann alternativ die Standardabweichung im Spektralbereich von 450 nm bis 650 nm herangezogen werden. Diesbezüglich hat sich eine Reflexionsschicht umfassend genau eine metallcarbid-basierte Schicht und genau eine optisch niedrigbrechende dielektrische Schicht als vorteilhaft erwiesen, wobei mit steigender Leitfähigkeit der metallcarbid-basierten Schicht eine verbesserte Glätte des Reflektionsspektrum erreicht wird.

In einer bevorzugten Ausführungsform der Erfindung ist zwischen der innenraumseitigen Oberfläche der Außenscheibe und der außenseitigen Oberfläche der Innenscheibe eine HUD-Schicht angeordnet. Das Prinzip eines Head-Up-Displays (HUD) und die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display". Die HUD-Schicht ist zwischen der Außenscheibe und der Innenscheibe angeordnet, wobei "zwischen" sowohl innerhalb der thermoplastischen Zwischenschicht bedeuten kann als auch in direktem räumlichen Kontakt auf der Innenseite der Außenscheibe und auf der Außenseite der Innenscheibe. Die HUD-Schicht ist zum Reflektieren von p-polarisiertem Licht geeignet ausgebildet. Die HUD-Schicht ist eine Reflektionsbeschichtung, die großflächig in der Verbundscheibe eingebracht ist, wobei der Bereich, in dem sich die HUD-Beschichtung befindet, auch als HUD-Bereich bezeichnet wird. Zur Nutzung der Verbundscheibe als Head-Up-Display wird ein Projektor auf den HUD-Bereich der Verbundscheibe gerichtet. Die Strahlung des Projektors ist bevorzugt überwiegend p-polarisiert. Die HUD-Schicht ist geeignet, p-polarisierte Strahlung zu reflektieren. Dadurch wird aus der Projektorstrahlung ein virtuelles Bild erzeugt, welches der Fahrer eines Fahrzeugs von ihm aus gesehen hinter der Verbundscheibe wahrnehmen kann.

Die erfindungsgemäße Projektionsanordnung ist besonders geeignet zur Kombination mit einer HUD-Schicht. Die auf der innenraumseitigen Oberfläche der Innenscheibe vorgesehene Reflexionsschicht sowie die in diesem Bereich angebrachte opake Abdeckschicht sind nur lokal auf den Randbereich der Verbundscheibe begrenzt und beeinflussen so die im Durchsichtbereich der Verbundscheibe angebrachte HUD-Schicht nicht. Dadurch, dass die Reflexionsschicht an einer exponierten Oberfläche der Verbundscheibe positioniert ist, kann die HUD-Schicht unabhängig von dieser an einer der internen Oberflächen der Verbundscheibe angebracht werden und ist dort vor Umwelteinflüssen geschützt.

Die HUD-Schicht umfasst vorzugsweise mindestens ein Metall ausgewählt aus der Gruppe, bestehend aus Aluminium, Zinn, Titan, Kupfer, Chrom, Cobalt, Eisen, Mangan, Zirkonium, Cer, Yttrium, Silber, Gold, Platin und Palladium, oder Mischungen davon.

In einer bevorzugten Ausführungsform der Erfindung ist die HUD-Schicht eine Beschichtung enthaltend einen Dünnschichtstapel, also eine Schichtenfolge dünner Einzelschichten. Dieser Dünnschichtstapel enthält eine oder mehrere elektrisch leitfähige Schichten auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Materialen auf der Basis von Silber sind besonders geeignet, um p-polarisiertes Licht zu reflektieren. Die Verwendung von Silber hat sich als besonders vorteilhaft bei der Reflexion von p-polarisiertem Licht erwiesen. Die Beschichtung weist eine Dicke von 5 nm bis 50 nm und bevorzugt von 8 nm bis 25 nm auf.

Ist die HUD-Schicht ist als eine Beschichtung ausgebildet so wird sie bevorzugt durch physikalische Gasphasenabscheidung (PVD), besonders bevorzugt durch Kathodenzerstäubung ("Sputtern") und ganz besonders bevorzugt durch magnetfeldunterstütze Kathodenzerstäubung ("Magnetron-Sputtern") auf die Innenscheibe oder Außenscheibe aufgebracht wird. Grundsätzlich kann die Beschichtung aber auch beispielsweise mittels chemischer Gasphasenabscheidung (CVD), beispielsweise plasmagestützte Gasphasenabscheidung (PECVD), durch Aufdampfen oder durch Atomlagenabscheidung (atomic layer deposition, ALD) aufgebracht werden. Die Beschichtung wird vor der Lamination auf die Scheiben aufgebracht.

Die HUD-Schicht kann auch als eine reflektierende Folie ausgebildet sein, die p-polarisiertes Licht reflektiert. Die HUD-Schicht kann eine Trägerfolie mit einer reflektierenden Beschichtung sein oder eine reflektierende Polymerfolie. Die reflektierende Beschichtung umfasst bevorzugt mindestens eine Schicht auf Basis eines Metalls und/oder eine dielektrische Schichtabfolge mit alternierenden Brechungsindizes. Die Schicht auf Basis eines Metalls enthält bevorzugt Silber und/oder Aluminium, oder besteht daraus. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid oder Siliziumcarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Die reflektierende Polymerfolie umfasst bevorzugt dielektrische Polymerschichten oder besteht daraus. Die dielektrischen Polymerschichten enthalten bevorzugt PET. Ist die HUD-Schicht als eine reflektierende Folie ausgebildet, ist sie bevorzugt von 30 µm bis 300 µm, besonders bevorzugt von 50 µm bis 200 µm und insbesondere von 100 µm bis 150 µm dick.

Handelt es sich um eine beschichtete, reflektierende Folie können zur Herstellung ebenfalls die Beschichtungsverfahren CVD oder PVD angewendet werden.

Gemäß einer weiteren bevorzugten Ausgestaltung ist die HUD-Schicht als reflektierende Folie ausgebildet und innerhalb der thermoplastischen Zwischenschicht angeordnet. Der Vorteil dieser Anordnung ist, dass die HUD-Schicht nicht mittels Dünnschichttechnologie (beispielsweise CVD und PVD) auf der Außenscheibe oder Innenscheibe aufgebracht werden muss. Hieraus ergeben sich Verwendungen der HUD-Schicht mit weiteren vorteilhaften Funktionen wie eine homogenere Reflexion des p-polarisierten Lichtes an der HUD-Schicht. Außerdem kann die Herstellung der Verbundscheibe vereinfacht werden, da die HUD-Schicht nicht vor der Laminierung über ein zusätzliches Verfahren auf der Außen- oder Innenscheibe angeordnet werden muss.

Die Verbundscheibe der Projektionsanordnung ist vorzugsweise eine Windschutzscheibe. Die optional vorhandene HUD-Schicht liegt dabei im Durchsichtbereich der Verbundscheibe. Die Gesamttransmission durch die Verbundscheibe beträgt in einer Ausgestaltung als Windschutzscheibe eines Kraftfahrzeugs mindestens 70%, bezogen auf die Lichtart A. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die Außenscheibe und Innenscheibe enthalten oder bestehen bevorzugt aus Glas, besonders bevorzugt Flachglas, Floatglas, Quarzglas, Borosilikatglas, Kalk-Natron-Glas, Alumino-Silikat-Glas, oder klaren Kunststoffen, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Die Außenscheibe und Innenscheibe können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der einzelnen Scheiben (Außenscheibe und Innenscheibe) kann breit variieren und den Erfordernissen des Einzelfalls angepasst werden. Vorzugsweise werden Scheiben mit den Standardstärken von 0,5 mm bis 5 mm und bevorzugt von 1,0 mm bis 2,5 mm verwendet. Die Größe der Scheiben kann breit variieren und richtet sich nach der Verwendung.

Die Verbundscheibe kann eine beliebige dreidimensionale Form aufweisen. Vorzugsweise haben die Außenscheibe und Innenscheibe keine Schattenzonen, so dass sie beispielsweise durch Kathodenzerstäubung beschichtet werden können. Bevorzugt sind die Außenscheibe und Innenscheibe plan oder leicht oder stark in eine Richtung oder in mehrere Richtungen des Raumes gebogen.

Die thermoplastische Zwischenschicht enthält oder besteht aus mindestens einem thermoplastischen Kunststoff, bevorzugt Polyvinylbutyral (PVB), Ethylenvinylacetat (EVA) und/oder Polyurethan (PU) oder Copolymere oder Derivate davon, gegebenenfalls in Kombination mit Polyethylenterephthalat (PET). Die thermoplastische Zwischenschicht kann aber auch beispielsweise Polypropylen (PP), Polyacrylat, Polyethylen (PE), Polycarbonat (PC), Polymethylmetacrylat, Polyvinylchlorid, Polyacetatharz, Gießharz, Acrylat, fluorinierte Ethylen-Propylen, Polyvinylfluorid und/oder Ethylen-Tetrafluorethylen, oder ein Copolymer oder Gemisch davon enthalten.

Die thermoplastische Zwischenschicht ist bevorzugt als mindestens eine thermoplastische Verbundfolie ausgebildet und enthält oder besteht aus Polyvinylbutyral (PVB), besonders bevorzugt aus Polyvinylbutyral (PVB) und dem Fachmann bekannte Additive wie beispielsweise Weichmacher. Bevorzugt enthält die thermoplastische Zwischenschicht mindestens einen Weichmacher.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykole. Besonders bevorzugt werden als Weichmacher 3G7, 3G8 oder 4G7 eingesetzt, wobei die erste Ziffer die Anzahl der Ethlenglykoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

Bevorzugt enthält die thermoplastische Zwischenschicht auf Basis von PVB mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 35 Gew.-% eines Weichmachers. Der Weichmacher enthält oder besteht beispielsweise aus Triethylenglykol-bis-(2-ethylhexanoat).

Die thermoplastische Zwischenschicht kann durch eine einzelne Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht bevorzugt von 0,25 mm bis 1 mm beträgt, typischerweise 0,38 mm oder 0,76 mm.

Die thermoplastische Zwischenschicht kann auch eine funktionale thermoplastische Zwischenschicht sein, insbesondere eine Zwischenschicht mit akustisch dämpfenden Eigenschaften, eine Infrarotstrahlung reflektierende Zwischenschicht, eine Infrarotstrahlung absorbierende Zwischenschicht und/oder eine UV-Strahlung absorbierende Zwischenschicht. So kann die thermoplastische Zwischenschicht beispielsweise auch eine Bandfilterfolie sein, die schmale Bänder des sichtbaren Lichts ausblendet.

Des Weiteren umfasst die Erfindung ein Verfahren zur Herstellung der erfindungsgemäßen Projektionsanordnung. Das Verfahren umfasst zumindest die Schritte:
(a) Bereitstellen einer Außenscheibe, einer Innenscheibe und einer thermoplastischen Zwischenschicht,
(b) Aufbringen mindestens einer opaken Abdeckschicht in zumindest einem zweiten Teilbereich der außenseitigen Oberfläche der Außenscheibe, der innenraumseitigen Oberfläche der Außenscheibe, der außenseitigen Oberfläche der Innenscheibe und/oder auf der außenseitigen Oberfläche der Innenscheibe,
(c) Zusammenlegen der Innenscheibe, der thermoplastischen Zwischenschicht und der Außenscheibe in dieser Reihenfolge zu einem Schichtstapel,
(d) Laminieren des Schichtstapels zu einer Verbundscheibe,
(e) Auftragen einer Reflexionsschicht auf zumindest einem ersten Teilbereich der innenraumseitigen Oberfläche der Innenscheibe und/oder der außenseitigen Oberfläche der Innenscheibe, wobei der erste Teilbereich zumindest teilweise überlappend mit dem zweiten Teilbereich verläuft und wobei die aufgetragene Reflexionsschicht innenraumseitig der opaken Abdeckschicht liegt,
(f) Ausrichten einer Lichtquelle für p-polarisiertes Licht auf die Verbundscheibe, so dass das p-polarisierte Licht auf die Reflexionsschicht fallen kann.

Schritt e) des Verfahrens erfolgt wahlweise vor, während oder nach den Schritten a) bis d). Ist allerdings mindestens eine opake Abdeckschicht auf der innenraumseitigen Oberfläche der Innenscheibe angebracht, so wird die Reflexionsschicht erst nach dem Aufbringen dieser opaken Abdeckschicht aufgebracht.

Bevorzugt ist die Reflexionsschicht an der innenraumseitigen Oberfläche der Innenscheibe als der Umgebung exponierte Schicht angebracht.

Die Reflexionsschicht reflektiert das p-polarisierte Licht. Das p-polarisierte Licht verlässt die Verbundscheibe auf der Innenseite der Innenscheibe.

Die Laminierung des Schichtstapels erfolgt unter Einwirkung von Hitze, Vakuum und/oder Druck, wobei die einzelnen Schichten durch mindestens eine thermoplastische Zwischenschicht miteinander verbunden (laminiert) werden. Es können an sich bekannte Verfahren zur Herstellung einer Verbundscheibe verwendet werden. Es können beispielsweise sogenannte Autoklav-Verfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Die Außenscheibe, die Innenscheibe und die thermoplastische Zwischenschicht können auch in einem Kalander zwischen mindestens einem Walzenpaar zu einer Verbundscheibe verpresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80°C bis 170°C laminiert werden können.

Verfahren zum Aufbringen der Reflexionsschicht sowie der Aufbau der Reflexionsschicht wurden bereits bei Beschreibung der Reflexionsschicht selbst erläutert.

In einer bevorzugten Ausführungsform des Verfahrens wird vor, während oder nach einem der Schritte a) und b) eine HUD-Schicht auf der innenraumseitigen Oberfläche der Innenscheibe und/oder der außenseitigen Oberfläche der Innenscheibe aufgetragen. In einer weiteren bevorzugten Ausführungsform ist die HUD-Schicht Bestandteil der thermoplastischen Zwischenschicht und wird mit dieser in die Verbundscheibe eingebracht. Verfahren zur Aufbringung einer HUD-Schicht wurden bereits bei Beschreibung der erfindungsgemäßen Projektionsanordnung erläutert.

Die bei Beschreibung der erfindungsgemäßen Projektionsanordnung erläuterten Verfahrensmerkmale gelten auch für das erfindungsgemäße Verfahren.

Die erfindungsgemäße Projektionsanordnung wird bevorzugt verwendet in Fahrzeugen für den Verkehr auf dem Lande, in der Luft oder zu Wasser, insbesondere in Kraftfahrzeugen. Besonders bevorzugt ist die Verwendung der Verbundscheibe als Fahrzeug-Windschutzscheibe.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine Querschnittansicht einer bevorzugten Ausführungsform der erfindungsgemäßen Projektionsanordnung,
- Figur 2: eine Draufsicht auf die Verbundscheibe von Fig. 1,
- Figuren 3-4: verschiedene Ausgestaltungen der erfindungsgemäßen Projektionsanordnung im Ausschnitt Z entlang der Schnittlinie AA' gemäß Figur 2,
- Figuren 5a-d: verschiedene Ausgestaltungen der Reflexionsbeschichtung der erfindungsgemäßen Projektionsanordnung,
- Figur 6: Reflexionsspektren der erfindungsgemäßen Verbundscheiben gemäß Beispielen 1 und 2 aus Tabelle 1 gegenüber p-polarisierter Strahlung unter 65°,
- Figur 7: Reflexionsspektren der erfindungsgemäßen Verbundscheiben gemäß Vergleichsbeispielen 1 bis 4 aus Tabelle 2 gegenüber p-polarisierter Strahlung unter 65°.

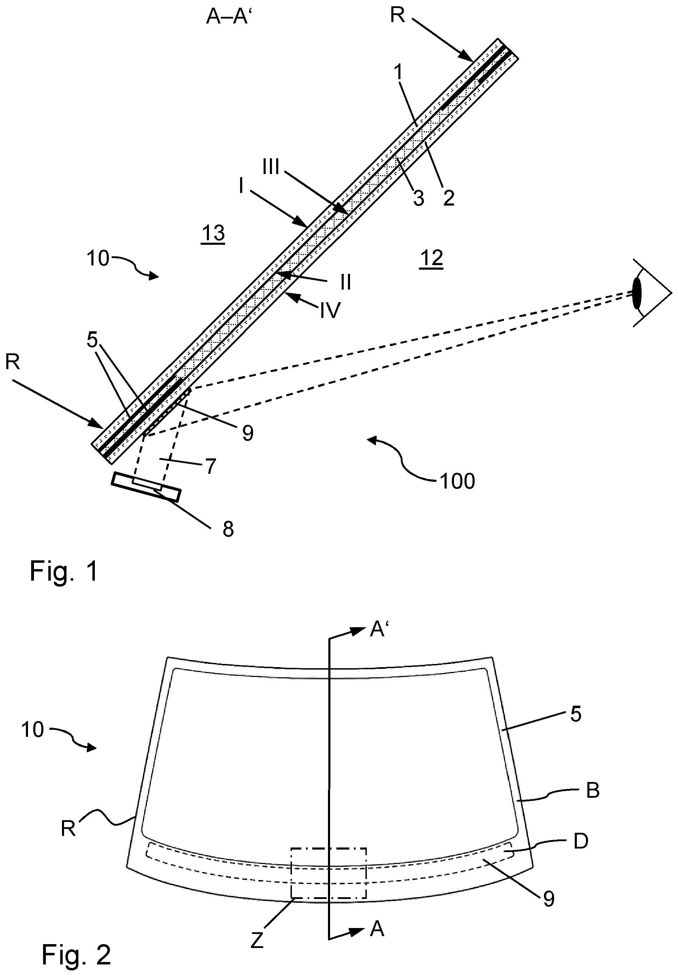

Figur 1 zeigt eine Querschnittansicht auf ein Ausführungsbeispiel der erfindungsgemäßen Projektionsanordnung 100 im Einbauzustand in einem Fahrzeug in Form einer schematischen Darstellung. Eine Draufsicht der Verbundscheibe 10 der Projektionsanordnung 100 ist in Figur 2 gezeigt. Die Querschnittansicht von Figur 1 entspricht der Schnittlinie A-A der Verbundscheibe 1, wie in Figur 2 angedeutet ist.

Die Verbundscheibe 10 umfasst eine Außenscheibe 1 und eine Innenscheibe 2 mit einer thermoplastischen Zwischenschicht 3, welche zwischen den Scheiben angeordnet ist. Die Verbundscheibe 10 ist in ein Fahrzeug eingebaut und trennt einen Fahrzeuginnenraum 12 von einer äußeren Umgebung 13 ab. Beispielsweise ist die Verbundscheibe 10 die Windschutzscheibe eines Kraftfahrzeugs.

Die Außenscheibe 1 und die Innenscheibe 2 bestehen jeweils aus Glas, vorzugsweise thermisch vorgespanntem Kalk-Natron-Glas und sind für sichtbares Licht transparent. Die thermoplastische Zwischenschicht 3 umfasst einen thermoplastischen Kunststoff, vorzugsweise Polyvinylbutyral (PVB), Ethylenvinylacetat (EVA) und/oder Polyethylenterephthalat (PET).

Die außenseitige Oberfläche I der Außenscheibe 1 ist von der thermoplastischen Zwischenschicht 3 abgewandt und ist gleichzeitig die Außenfläche der Verbundscheibe 10. Die innenraumseitige Oberfläche II der Außenscheibe 1 sowie die außenseitige Oberfläche III der Innenscheibe 2 sind jeweils der Zwischenschicht 3 zugewandt. Die innenraumseitige Oberfläche IV der Innenscheibe 2 ist von der thermoplastischen Zwischenschicht 3 abgewandt und ist gleichzeitig die Innenseite der Verbundscheibe 10. Es versteht sich, dass die Verbundscheibe 10 jede beliebige geeignete geometrische Form und/oder Krümmung aufweisen kann. Als Verbundscheibe 10 weist sie typischer Weise eine konvexe Wölbung auf.

In einem umlaufenden Randbereich R der Verbundscheibe 10 befindet sich, auf der innenraumseitigen Oberfläche II der Außenscheibe 1, eine rahmenförmig umlaufende opake Abdeckschicht 5. Die Abdeckschicht 5 ist opak und verhindert die Sicht auf innenseitig der Verbundscheibe 10 angeordnete Strukturen. Weiterhin weist die Verbundscheibe 1 im Randbereich R auf der außenseitigen Oberfläche II der Innenscheibe 2 ebenfalls eine opake Abdeckschicht 5 auf, die rahmenförmig umlaufend ausgebildet ist. Die opaken Abdeckschichten 5 bestehen aus einem herkömmlicherweise für Abdeckdrucke verwendeten, elektrisch nichtleitendem Material, beispielsweise einer schwarz eingefärbten Siebdruckfarbe, die eingebrannt ist. Die opaken Abdeckschichten 5 verhindern die Durchsicht durch die Verbundscheibe 10, wodurch beispielsweise ein Klebestrang zum Einkleben der Verbundscheibe 10 in eine Fahrzeugkarosserie von der Außenseite 13 aus betrachtet nicht sichtbar ist. Mindestens eine der Abdeckschichten 5 ist in einem Teilbereich B der Scheibe aufgebracht. Auf die zweite der Abdeckschichten 5 kann auch verzichtet werden. Gemäß Figur 2 erstreckt sich ein Teilbereich B umlaufend im Randbereich R der Verbundscheibe 10. Entlang eines Kantenabschnitts der Verbundscheibe 10 sind der Teilbereich B und die darin befindliche die opake Abdeckschicht 5 verbreitert, wobei der verbreiterte Teilbereich B im Einbauzustand der Scheibe als Windschutzscheibe in einem Kraftfahrzeug in Nachbarschaft zur Motorkante und zum Armaturenbrett liegt.

Auf der innenraumseitigen Oberfläche IV der Innenscheibe 2 befindet sich eine Reflexionsschicht 9. Die Reflexionsschicht 9 ist in Durchsicht durch die Verbundscheibe 10 in Überdeckung zu einer der auf Oberflächen II und III befindlichen opaken Abdeckschichten 5 angeordnet, wobei mindestens eine diese opaken Abdeckschichten 5 die Reflexionsschicht 9 vollständig überdeckt, d.h. die Reflexionsschicht 9 weist keinen Abschnitt auf, der nicht in Überdeckung zu einer der Abdeckschichten 5 ist. Die Reflexionsschicht 9 ist hier beispielsweise nur in einem Abschnitt des Randbereichs R der Verbundscheibe 10 angeordnet, der im Einbauzustand benachbart zum Motorraum des Kraftfahrzeugs liegt. Möglich wäre aber auch, die Reflexionsschicht 9 in einem oberen (dachseitigen) Abschnitt oder in einem seitlichen Abschnitt des Randbereichs R anzuordnen. Des Weiteren könnten mehrere Reflexionsschichten 9 in den genannten Abschnitten des Randbereichs R vorgesehen sein. Beispielsweise könnten die Reflexionsschichten 9 so angeordnet sein, dass ein (teilweise) umlaufendes Bild erzeugt wird. Mindestens eine der auf der innenraumseitigen Oberfläche II der Außenscheibe 1 und/oder der außenseitigen Oberfläche III der Innenscheibe 2 befindlichen opaken Abdeckschichten 5 ist in dem Abschnitt verbreitert, in dem sich der erste Teilbereich D mit Reflexionsschicht 9 befindet. Auf diese Weise wird eine Überlappung des ersten Teilbereichs D mit Reflexionsschicht 9 und des zweiten Teilbereichs B mit opaker Abdeckschicht 5 erzielt. Als "Breite" wird die größte Abmessung einer opaken Abdeckschicht 5 senkrecht zu deren Erstreckung verstanden. Die erfindungsgemäße Überlappung zwischen Reflexionsschicht 9 und opaker Abdeckschicht 5 muss nicht durch eine unmittelbar an die Reflexionsschicht 9 angrenzende Abdeckschicht 5 erfolgen. In diesem Sinne ist eine der opaken Abdeckschichten 5 gemäß Figur 1 lediglich optional, wobei die verbleibende opake Abdeckschicht 5 einen Teilbereich B ausfüllen muss, der zumindest teilweise deckungsgleich mit dem Teilbereich D der Reflexionsschicht 9 ist.

Die Projektionsanordnung 100 weist eine Lichtquelle 8 als Bildgeber auf. Die Lichtquelle 8 dient zur Erzeugung von p-polarisiertem Licht 7 (Bildinformationen), das auf die Reflexionsschicht 9 gerichtet wird und durch die Reflexionsschicht 9 als reflektiertes Licht in den Fahrzeuginnenraum 12 reflektiert wird, wo es von einem Betrachter, z.B. Fahrer, wahrgenommen werden kann. Die Reflexionsschicht 9 ist zur Reflexion des p-polarisiertem Lichts 7 der Lichtquelle 8, d.h. eines Bildes gebildet durch das Licht 7 der Lichtquelle 8, geeignet ausgebildet. Das p-polarisierte Licht 7 trifft bevorzugt mit einem Einfallswinkel von 50° bis 80°, insbesondere von 65° bis 75° auf die Verbundscheibe 1. Die Lichtquelle 8 ist beispielsweise ein Display, vorliegend ein LCD-Display. Möglich wäre beispielsweise auch, dass es sich bei der Verbundscheibe 10 um eine Dachscheibe, Seiten- oder Heckscheibe handelt.

In der Draufsicht von Figur 2 ist die Reflexionsschicht 9 in Erstreckung entlang des unteren Abschnitts des Randbereichs R der Verbundscheibe 10 dargestellt.

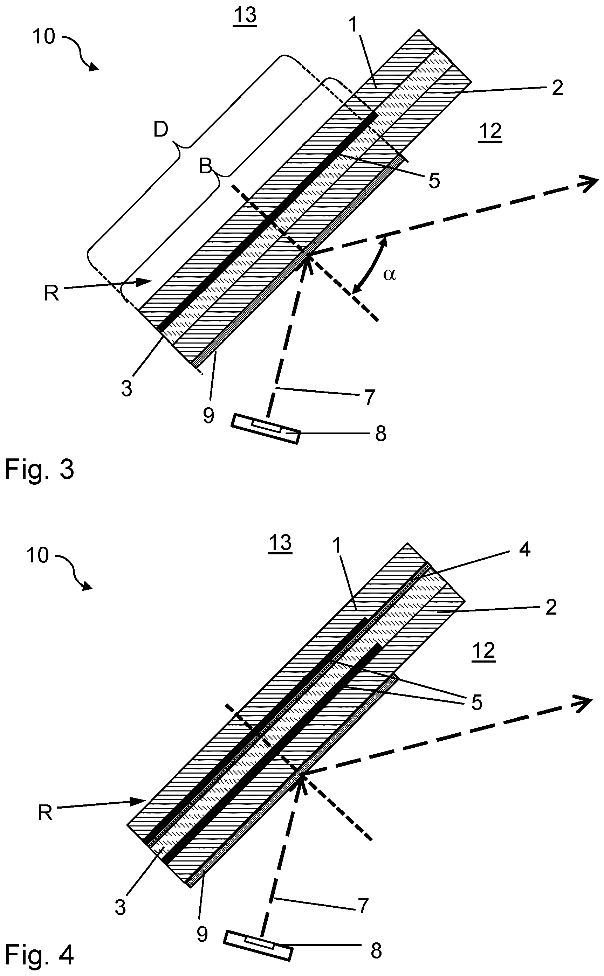

Es wird nun Bezug auf die Figuren 3 und 4 genommen, worin vergrößerte Querschnittansichten verschiedener Ausgestaltungen der Verbundscheibe 1 gezeigt sind. Die Querschnittansichten der Figuren 3 und 4 entsprechen der Schnittlinie A-A im unteren Ausschnitt Z des Randbereichs R der Verbundscheibe 1, wie in Figur 2 angedeutet ist.

Die in Figur 3 gezeigte Ausführungsform der Verbundscheibe 10, entspricht im Wesentlichen der Verbundscheibe gemäß Ausführungsform der Figur 1. Im Unterschied dazu weist die Verbundscheibe lediglich einen opaken Abdeckdruck 5 auf, der auf der innenraumseitigen Oberfläche II der Außenscheibe 1 angebracht ist. Dabei befindet sich die opake Abdeckschicht 5 im Teilbereich B. Im Teilbereich D ist auf der innenraumseitigen Oberfläche IV die Reflexionsschicht 9 aufgebracht. Das von der Lichtquelle 8 auf die Reflexionsschicht 9 projizierte Bild ist vor dem Hintergrund der opaken Abdeckschicht 5 mit hohem Kontrast gut erkennbar.

Die in Figur 4 gezeigte Ausführungsform der Verbundscheibe 10 unterscheidet sich von der Ausführungsform der Figur 3 dadurch, dass diese über zwei opake Abdeckschichten 5 verfügt. Eine opake Abdeckschicht 5 ist auf der außenseitigen Oberfläche III der Innenscheibe 2 aufgebracht, während sich eine weitere opake Abdeckschicht 5 auf der innenraumseitigen Oberfläche II befindet. Zusätzlich dazu umfasst die Verbundscheibe 10 eine HUD-Schicht 4, die auf der innenraumseitigen Oberfläche II der Außenscheibe 1 angebracht ist. Die HUD-Schicht 4 erstreckt sich auch in den Durchsichtbereich der Verbundscheibe 10, also den Bereich, in dem keine der opaken Abdeckschichten 5 vorhanden ist. Auf diesen Bereich der Scheibe kann ein Projektor (nicht gezeigt) gerichtet werden und die HUD-Schicht 4 als Projektionsfläche für ein virtuelles Bild erzeugt werden. Die der Reflexionsschicht 9 nächstliegende opake Abdeckschicht 5 ist auf der außenseitigen Oberfläche III der Innescheibe 1 aufgebracht und dient dort als opaker Hintergrund des Bildes der Reflexionsschicht. Die opake Abdeckschicht 5 auf der außenseitigen Oberfläche III der Innenscheibe 2 und verdeckt die HUD-Schicht 4 für den im Innenraum 12 befindlichen Betrachter. Die HUD-Schicht 4 kann unabhängig von der Reflexionsschicht 9 genutzt werden, wobei sich das Bild der Reflexionsschicht 9 und das HUD-Bild nicht gegenseitig beeinflussen.

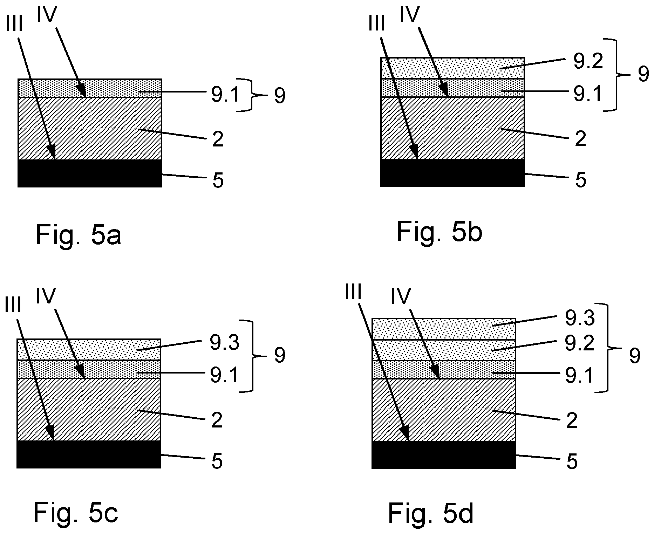

Figuren 5a-d zeigen verschiedene erfindungsgemäße Ausführungsformen der Reflexionsschicht 9, die auf der innenraumseitigen Oberfläche IV der Innenscheibe 2 angebracht ist. Auf der außenseitigen Oberfläche III der Innenscheibe 2 ist in allen Ausführungsformen der Figuren 5a-d eine opake Abdeckschicht 5 aufgebracht. Gemäß Figur 5a besteht die Reflexionsschicht 9 aus einer metallcarbid-basierten Schicht 9.1. Gemäß Figur 5b besteht die Reflexionsschicht 9 aus, in dieser Reihenfolge auf der innenraumseitigen Oberfläche IV der Innenscheibe 2 angebracht, einer metallcarbid-basierten Schicht 9.1 und einer dielektrischen Schicht 9.2. In Figur 5c ist eine Reflexionsbeschichtung 9 bestehend aus, in dieser Reihenfolge auf die innenraumseitige Oberfläche IV der Innenscheibe 2 aufgebracht, einer metallcarbid-basierten Schicht 9.1 und einer organischen Schutzschicht 9.3. In einer weiteren Ausführungsform gemäß Figur 5d besteht die Reflexionsschicht 9 aus in dieser Reihenfolge, ausgehend von der innenraumseitigen Oberfläche IV der Innenscheibe 2, einer metallcarbid-basierten Schicht 9.1, einer dielektrischen Schicht 9.2 und einer organischen Schutzschicht 9.3.

In weiteren erfindungsgemäßen Ausgestaltungen ist die Reflexionsbeschichtung 9 gemäß einer der Figuren 5a-5d ausgeführt und die opake Abdeckschicht 5 befindet sich auf der innenraumseitigen Oberfläche III der Außenscheibe 1. In allen Ausführungsbeispielen ist die Reflexionsschicht 9 fahrzeuginnenraumseitig der opaken Abdeckschicht 5 angeordnet, d.h. in Sicht auf die Innenseite der Verbundscheibe 10 befindet sich die Reflexionsschicht 9 vor der opaken Abdeckschicht 5.

Die Erfindung wird im Folgenden anhand von Beispielen und Vergleichsbeispielen erläutert. Die Reflexionseigenschaften erfindungsgemäßer Verbundscheiben für p-polarisiertes Licht und nicht erfindungsgemäßer Verbundscheiben werden im Folgenden verglichen. Der Grundaufbau der Verbundscheiben entspricht dabei dem in Figur 3 beschriebenen, wobei die Verbundscheiben sich in der Zusammensetzung der Reflexionsschicht und in der Position der Reflexionsschicht an der außenseitigen Oberfläche III oder der innenraumseitigen Oberfläche IV der Innenscheibe unterscheiden. Die Reflexionsschicht ist jeweils auf der innenraumseitigen Oberfläche IV oder der außenseitigen Oberfläche III der Innenscheibe 2 in einem Bereich D angebracht, der innerhalb des Bereichs B liegt, in dem ein opaker Abdeckdruck 5 angebracht ist. Die Schichtdicken, der Schichtaufbau sowie die Brechungsindizes der dielektrischen Schichten sind für die erfindungsgemäßen Beispiele B1 und B2 in Tabelle 1 und für die nicht erfindungsgemäßen Vergleichsbeispiele V1 bis V4 in Tabelle 2 zusammengefasst. In den erfindungsgemäßen Beispielen B1 und B2 umfasst die Reflexionsschicht 9 eine metallcarbid-basierte Schicht und eine dielektrische Schicht, während in den nicht erfindungsgemäßen Vergleichsbeispielen V1 bis V4 lediglich dielektrische Schichten verwendet werden.

**Tabelle 1**

| | Bezugszeichen | | Schichtdicken und Brechungsindizes | |
|---|---|---|---|---|
| | | | B1 | B2 |
| dielektrische Schicht | 9 | 9.2 | - | - |
| metallcarbid-basierte Schicht | | 9.1 | TiC | TiC |
| | | | 45 nm | 45 nm |
| Kalk-Natron-Glas | 2 | | | |
| Oberfläche mit Reflexionsschicht 9 | | | III | IV |

**Tabelle 2**

| Dielektrische Schichten | Bezugszeichen | Schichtdicken und Brechungsindizes | | | |
|---|---|---|---|---|---|
| | | V1 | V2 | V3 | V4 |
| TiO₂ | 9 | - | - | 50,0 nm, n = 2,45 | - |
| SiO₂ | | 190,0 nm, n = 1,45 | - | 190,0 nm, n = 1,45 | - |
| TiO₂ | | 50,0 nm, n = 2,45 | - | 50,0 nm, n = 2,45 | 50,0 nm, n = 2,45 |
| SiAlOₓ | | - | 125 nm, n = 1,45 | - | - |
| TiOₓ | | - | 60nm, n = 2,45 | - | - |
| Kalk-Natron-Glas | 2 | | | | |
| Oberfläche mit Reflexionsschicht 9 | | IV | IV | IV | IV |

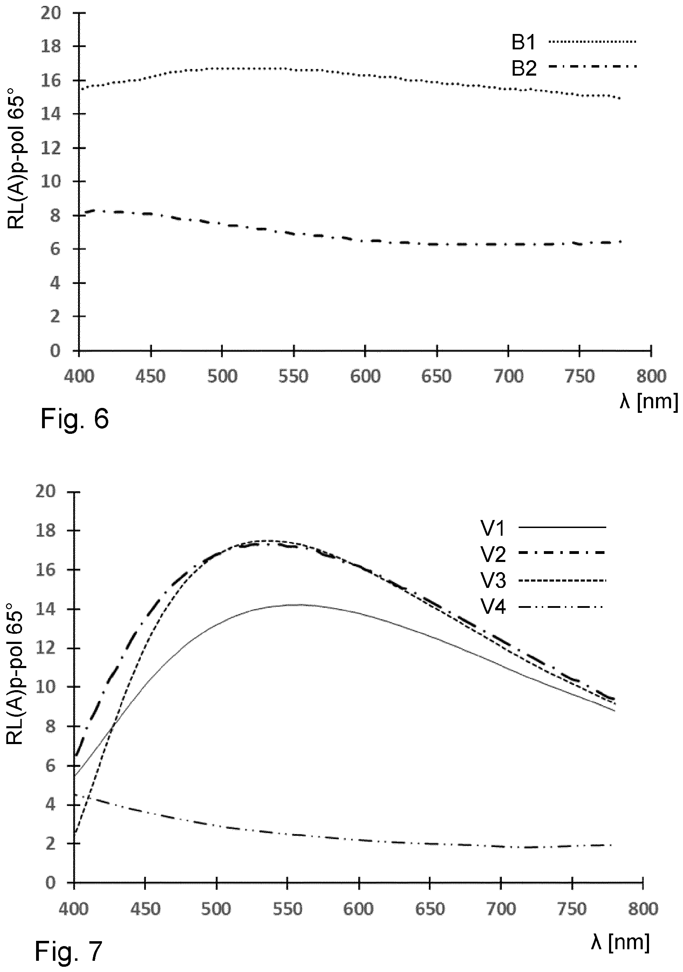

Die für die Bildqualität wesentliche Reflektivität für p-polarisiertes Licht wird mit *RL(A) p-pol* bezeichnet und an der innenraumseitigen Oberfläche IV der Innenscheibe 2 unter 65° bestimmt. Die Werte für die Reflexion (RL) beziehen sich auf die Lichtart A, die definitionsgemäß angelehnt ist an die relative Strahlungsverteilung des planckschen Strahlers mit 2856 Kelvin. Die entsprechenden Reflexionsspektren sind in Figuren 6 und 7 gezeigt.

Ein Vergleich der Eigenschaften der Reflexionsschicht 9 gemäß Beispielen B1 und B2 und Vergleichsbeispielen V1 bis V4 zeigt, dass die erfindungsgemäßen Reflexionsschichten gemäß Beispielen B1 und B2 eine gegenüber Vergleichsbeispielen V1 bis V4 vergleichbare Reflektion unter 65° aufweisen, wobei die erfindungsgemäßen Reflexionsschichten gemäß Beispielen B1 und B2 ein wesentlich glatteres Reflexionsspektrum ergeben, das der Betrachter als farbneutraleres Projektionsbild wahrnimmt.

In ersten Versuchen der Erfinder hat sich gezeigt, dass ähnlich glatte Reflexionsspektren bei guter Reflexionsintensität mittels einer Reflexionsschicht bestehend aus einer Schicht Chromcarbid (Cr₃C₂ mit einer Dicke von 40 nm) als metallcarbid-basierte Schicht und einer dielektrischen Schicht aus SiO₂ mit einem Brechungsindex von 1,45 und einer Dicke von 100 nm erreicht werden, wobei die Reflexionsschicht auf der innenraumseitigen Oberfläche der Innenscheibe aufgetragen wurde.

### Bezugszeichenliste

- 10: Verbundscheibe
- 1: Außenscheibe
- 2: Innenscheibe
- 3: thermoplastische Zwischenschicht
- 4: HUD-Schicht
- 5: opake Abdeckschicht
- 7: p-polarisiertes Licht der Lichtquelle
- 8: Lichtquelle
- 9: Reflexionsschicht
- 9.1: metallcarbid-basierte Schicht
- 9.2: dielektrische Schicht
- 9.3: organische Schutzschicht

- 12: Fahrzeuginnenraum
- 13: äußere Umgebung

- 100: Projektionsanordnung

- D: erster Teilbereich
- B: zweiter Teilbereich
- R: Randbereich

- I: außenseitige Oberfläche der Außenscheibe 1
- II: innenraumseitige Oberfläche der Außenscheibe 1
- III: außenseitige Oberfläche der Innenscheibe 2
- IV: innenraumseitige Oberfläche der Innenscheibe 2

- A-A': Schnittlinie

## Patentansprüche

1. Projektionsanordnung (100) mindestens umfassend eine Lichtquelle (8) für p-polarisiertes Licht (7) und eine Verbundscheibe (10), die eine Außenscheibe (1) mit einer außenseitigen Oberfläche (I) und einer innenraumseitigen Oberfläche (II), eine Innenscheibe (2) mit einer außenseitigen Oberfläche (III) und einer innenraumseitigen Oberfläche (IV) und eine thermoplastische Zwischenschicht (3) umfasst, wobei
- die innenraumseitige Oberfläche (II) der Außenscheibe (1) und die außenseitige Oberfläche (III) der Innenscheibe (2) über die thermoplastische Zwischenschicht (3) miteinander verbunden sind,
- in mindestens einem ersten Teilbereich (D) der Verbundscheibe (10) an der innenraumseitigen Oberfläche (IV) der Innenscheibe (2) und/oder an der außenseitigen Oberfläche (III) der Innenscheibe (2) eine Reflexionsschicht (9) angeordnet ist, die zur Reflektion des p-polarisierten Lichtes (7) der Lichtquelle (8) geeignet ist,
- die innenraumseitige Oberfläche (IV) der Innenscheibe (2) die der Lichtquelle (8) für p-polarisiertes Licht (7) nächstliegende Oberfläche der Verbundscheibe (10) ist,
- mindestens eine opake Abdeckschicht (5) zumindest in einem zweiten Teilbereich (B) der Verbundscheibe (10) auf der außenseitigen Oberfläche (I) der Außenscheibe (1), auf der innenraumseitigen Oberfläche (II) der Außenscheibe (1), auf der außenseitigen Oberfläche (III) der Innenscheibe (2) und/oder auf der innenraumseitigen Oberfläche (IV) der Innenscheibe (2) angeordnet ist, der Abstand der Reflexionsschicht (9) zur Lichtquelle (8) geringer ist als der Abstand der opaken Abdeckschicht (5) zur Lichtquelle (8) und eine Projektion des ersten Teilbereichs (D) in die Ebene des zweiten Teilbereichs (B) zumindest teilweise mit diesem deckungsgleich ist,
**dadurch gekennzeichnet, dass** die Reflexionsschicht (9) zumindest eine metallcarbid-basierte Schicht (9.1) umfasst, wobei die metallcarbid-basierte Schicht (9.1) mindestens 95 Gew.-% eines oder mehrerer Metallcarbide enthält, wobei die metallcarbid-basierte Schicht (9.1) Chromcarbid, Titancarbid, Zirkoniumcarbid, Hafniumcarbid, Molybdäncarbid und/oder Wolframcarbid umfasst.

2. Projektionsanordnung (100) nach Anspruch 1, bei welcher die Reflexionsschicht (9) unmittelbar angrenzend zur Umgebung an der innenraumseitigen Oberfläche (IV) der Innenscheibe (2) angeordnet ist.

3. Projektionsanordnung (100) nach Anspruch 1 oder 2, bei welcher die Reflexionsschicht (9) mindestens 5 %, bevorzugt mindestens 6 %, besonders bevorzugt mindestens 10 % des auf die Reflexionsschicht (9) auftreffenden p-polarisierten Lichtes (7) in einem Wellenlängenbereich von 450 nm bis 650 nm reflektiert.

4. Projektionsanordnung (100) nach einem der Ansprüche 1 bis 3, bei welcher die Lichtquelle (8) für p-polarisiertes Licht (7) ein Display, bevorzugt ein LCD-Display, LED-Display, OLED-Display oder elektrolumineszentes Display, besonders bevorzugt ein LCD-Display, ist und das p-polarisierte Licht (7) bevorzugt mit einem Einfallswinkel von 55° bis 80° auf die Verbundscheibe (10) trifft, besonders bevorzugt von 62° bis 77°.

5. Projektionsanordnung (100) nach einem der Ansprüche 1 bis 4, bei welcher die Projektion des ersten Teilbereichs (D) in die Ebene des zweiten Teilbereichs (B) flächenmäßig vollständig innerhalb des zweiten Teilbereichs (B) liegt.

6. Projektionsanordnung (100) nach einem der Ansprüche 1 bis 5, bei welcher mindestens eine opake Abdeckschicht (5) zumindest teilweise in einem umlaufenden Randbereich (R) der Verbundscheibe (10) angeordnet ist.

7. Projektionsanordnung (100) nach einem der Ansprüche 1 bis 6, bei welcher mindestens eine opake Abdeckschicht (5) in Form eines opaken Abdeckdrucks auf der innenraumseitigen Oberfläche (II) der Außenscheibe (2) und/oder der außenseitigen Oberfläche (III) der Innenscheibe (1) angeordnet ist.

8. Projektionsanordnung (100) nach einem der Ansprüche 1 bis 7, bei welcher die metallcarbid-basierte Schicht (9.1) eine Dicke von 10 nm bis 100 nm, bevorzugt 15 nm bis 70 nm, besonders bevorzugt 20 nm bis 50 nm aufweist.

9. Projektionsanordnung (100) nach einem der Ansprüche 1 bis 8, bei welcher die Reflexionsschicht (9) mindestens eine dielektrische Schicht (9.2) umfasst, die oberhalb der metallcarbid-basierten Schicht (9.1) angebracht ist.

10. Projektionsanordnung (100) nach Anspruch 9, bei welcher die dielektrische Schicht (9.2) eine optisch niedrigbrechende Schicht mit einem Brechungsindex von kleiner als 1,6 ist.

11. Projektionsanordnung (100) nach Anspruch 10, bei welcher die dielektrische Schicht (9.2) Siliziumoxid umfasst, bevorzugt aus Siliziumoxid besteht.

12. Projektionsanordnung (100) nach einem der Ansprüche 8 bis 11, bei welcher die dielektrische Schicht (9.2) eine Dicke von 50 nm bis 200 nm, bevorzugt von 100 nm bis 150 nm, aufweist.

13. Projektionsanordnung (100) nach einem der Ansprüche 1 bis 12, bei welcher die Reflexionsbeschichtung (9) eine organische Schutzschicht (9.3) umfasst, die oberhalb der metallcarbid-basierten Schicht (9.1) oder der dielektrischen Schicht (9.2) angebracht ist und unmittelbar an die Umgebung grenzt.

14. Verfahren zur Herstellung einer Projektionsanordnung (100) nach einem der Ansprüche 1 bis 13, bei welchem
a) eine Außenscheibe (1), eine Innenscheibe (2) und eine thermoplastische Zwischenschicht (3) bereitgestellt werden,
b) in zumindest einem zweiten Teilbereich (B) auf der außenseitigen Oberfläche der (I) der Außenscheibe (1), auf der innenraumseitigen Oberfläche (II) der Außenscheibe (1), auf der außenseitigen Oberfläche (III) der Innenscheibe (2) und/oder auf der innenraumseitigen Oberfläche (IV) der Innenscheibe (2) mindestens eine opake Abdeckschicht (5) aufgebracht wird,
c) zumindest die Innenscheibe (2), die thermoplastische Zwischenschicht (3) und die Außenscheibe (1) in dieser Reihenfolge zu einem Schichtstapel zusammengelegt werden,
d) der Schichtstapel aus zumindest Innenscheibe (2), thermoplastischer Zwischenschicht (3) und Außenscheibe (1) zu einer Verbundscheibe (10) laminiert wird,
e) auf zumindest einem ersten Teilbereich (D) der innenraumseitigen Oberfläche (IV) der Innenscheibe (2) und/oder der außenseitigen Oberfläche (III) der Innenscheibe (2) eine Reflexionsschicht (9) aufgetragen wird und
f) eine Lichtquelle (8) für p-polarisiertes Licht (7) so zur Verbundscheibe (10) ausgerichtet wird, dass das p-polarisierte Licht (7) der Lichtquelle (8) auf die Reflexionsschicht (9) fallen kann,
wobei Schritt e) vor, während oder nach den Schritten a) bis d) erfolgen kann, jedoch bei Vorliegen einer opaken Abdeckschicht (5) auf der innenraumseitigen Oberfläche (IV) der Innenscheibe (2) nach dem Aufbringen dieser opaken Abdeckschicht (5) erfolgt.

## Claims

1. Projection assembly (100) at least comprising a light source (8) for p-polarized light (7) and a composite pane (10) that comprises an outer pane (1) with an exterior-side surface (I) and an interior-side surface (II), an inner pane (2) with an exterior-side surface (III) and an interior-side surface (IV), and a thermoplastic intermediate layer (3), wherein
- the interior-side surface (II) of the outer pane (1) and the exterior-side surface (III) of the inner pane (2) are joined to one another via the thermoplastic intermediate layer (3),
- in at least one first subregion (D) of the composite pane (10), a reflection layer (9) that is suitable for reflecting the p-polarized light (7) of the light source (8) is arranged on the interior-side surface (IV) of the inner pane (2) and/or on the exterior-side surface (III) of the inner pane (2),
- the interior-side surface (IV) of the inner pane (2) is the surface of the composite pane (10) nearest the light source (8) for p-polarized light (7),
- at least one opaque cover layer (5) is arranged at least in a second subregion (B) of the composite pane (10) on the exterior-side surface (I) of the outer pane (1), on the interior-side surface (II) of the outer pane (1), on the exterior-side surface (III) of the inner pane (2), and/or on the interior-side surface (IV) of the inner pane (2), the distance of the reflection layer (9) from the light source (8) is less than the distance of the opaque cover layer (5) from the light source (8), and a projection of the first subregion (D) into the plane of the second subregion (B) is at least partially congruent therewith,
**characterized in that** the reflection layer (9) includes at least one metal carbide-based layer (9.1) wherein the metal carbide-based layer (9.1) contains at least 95 wt.-% of one or more metal carbides, wherein the metal carbide-based layer (9.1) comprises chromium carbide, titanium carbide, zirconium carbide, hafnium carbide, molybdenum carbide, and/or tungsten carbide.

2. Projection assembly (100) according to claim 1, in which the reflection layer (9) is arranged directly adjacent the surroundings on the interior-side surface (IV) of the inner pane (2).

3. Projection assembly (100) according to claim 1 or 2, in which the reflection layer (9) reflects at least 5%, preferably at least 6%, particularly preferably at least 10% of the p-polarized light (7) in a wavelength range from 450 nm to 650 nm incident on the reflection layer (9).

4. Projection assembly (100) according to one of claims 1 through 3, in which the light source (8) for p-polarized light (7) is a display, preferably an LCD display, LED display, OLED display, or electroluminescent display, particularly preferably an LCD display, and the p-polarized light (7) preferably strikes the composite pane (10) at an angle of incidence of 55° to 80°, particularly preferably of 62° to 77°.

5. Projection assembly (100) according to one of claims 1 through 4, in which the projection of the first subregion (D) into the plane of the second subregion (B) is entirely within the second subregion (B) in terms of area.

6. Projection assembly (100) according to one of claims 1 through 5, in which at least one opaque cover layer (5) is arranged at least partially in a circumferential edge region (R) of the composite pane (10).

7. Projection assembly (100) according to one of claims 1 through 6, in which at least one opaque cover layer (5) in the form of an opaque masking print is arranged on the interior-side surface (II) of the outer pane (2) and/or on the exterior-side surface (III) of the inner pane (1).

8. Projection assembly (100) according to one of claims 1 through 7, in which the metal carbide-based layer (9.1) has a thickness of 10 nm to 100 nm, preferably 15 nm to 70 nm, particularly preferably 20 nm to 50 nm.

9. Projection assembly (100) according to one of claims 1 through 8, in which the reflection layer (9) includes at least one dielectric layer (9.2), which is placed above the metal carbide-based layer (9.1).

10. Projection assembly (100) according to claim 9, in which the dielectric layer (9.2) is an optically low-refractive-index layer with a refractive index of less than 1.6.

11. Projection assembly (100) according to claim 10, in which the dielectric layer (9.2) includes silicon oxide, preferably consists of silicon oxide.

12. Projection assembly (100) according to one of claims 8 through 11, in which the dielectric layer (9.2) has a thickness of 50 nm to 200 nm, preferably of 100 nm to 150 nm.

13. Projection assembly (100) according to one of claims 1 through 12, in which the reflection coating (9) includes an organic protective layer (9.3), which is placed above the metal carbide-based layer (9.1) or the dielectric layer (9.2) and is directly adjacent the surroundings.

14. Method for producing a projection assembly (100) according to one of claims 1 through 13, in which
a) an outer pane (1), an inner pane (2), and a thermoplastic intermediate layer (3) are provided,
b) at least one opaque cover layer (5) is applied in at least one second subregion (B) on the exterior-side surface (I) of the outer pane (1), on the interior-side surface (II) of the outer pane (1), on the exterior-side surface (III) of the inner pane (2), and/or on the interior-side surface (IV) of the inner pane (2),
c) at least the inner pane (2), the thermoplastic intermediate layer (3), and the outer pane (1) are placed together in this order to form a layer stack,
d) the layer stack composed of at least the inner pane (2), the thermoplastic intermediate layer (3), and the outer pane (1) is laminated to form a composite pane (10),
e) a reflection layer (9) is applied to at least one first subregion (D) of the interior-side surface (IV) of the inner pane (2) and/or the exterior-side surface of the inner pane (2), and
f) a light source (8) for p-polarized light (7) is oriented relative to the composite pane (10) such that the p-polarized light (7) of the light source (8) can strike the reflection layer (9),
wherein step e) can take place before, during, or after steps a) through d), but, if there is an opaque cover layer (5) on the interior-side surface (IV) of the inner pane (2), takes place after application of this opaque cover layer (5).

## Revendications

1. Ensemble de projection (100) comprenant au moins une source lumineuse (8) pour une lumière polarisée p (7) et une vitrecomposite (10) qui comprend une vitre extérieure (1) présentant une surface côté extérieur (I) et une surface côté intérieur (II), une vitre intérieure (2) présentant une surface côté extérieur (III) et une surface côté intérieur (IV), et une couche intermédiaire thermoplastique (3), dans lequel
- la surface côté intérieur (II) de la vitre extérieure (1) et la surface côté extérieur (III) de la vitre intérieure (2) sont reliées l'une à l'autre par l'intermédiaire de la couche intermédiaire thermoplastique (3),
- dans au moins une première sous-région (D) de la vitre composite (10), une couche réfléchissante (9) apte à réfléchir la lumière polarisée p (7) de la source lumineuse (8) est disposée sur la surface côté intérieur (IV) de la vitre intérieure (2) et/ou sur la surface côté extérieur (III) de la vitre intérieure (2),
- la surface côté intérieur (IV) de la vitre intérieure (2) est la surface de la vitre composite (10) la plus proche de la source lumineuse (8) pour la lumière polarisée p (7),
- au moins une couche de recouvrement opaque (5) est disposée au moins dans une deuxième sous-région (B) de la vitre composite (10) sur la surface côté extérieur (I) de la vitre extérieure (1), sur la surface côté intérieur (II) de la vitre extérieure (1), sur la surface côté extérieur (III) de la vitre intérieure (2) et/ou sur la surface côté intérieur (IV) de la vitre intérieure (2), la distance entre la couche réfléchissante (9) et la source lumineuse (8) est inférieure à la distance entre la couche de recouvrement opaque (5) et la source lumineuse (8), et une projection de la première sous-région (D) dans le plan de la deuxième sous-région (B) y est au moins partiellement congruente,
**caractérisé en ce que** la couche réfléchissante (9) comprend au moins une couche à base de carbure métallique (9.1), dans laquelle la couche à base de carbure métallique (9.1) contient au moins 95 % en poids d'un ou plusieurs carbures métalliques, et dans laquelle la couche à base de carbure métallique (9.1) comprend du carbure de chrome, du carbure de titane, du carbure de zirconium, du carbure d'hafnium, du carbure de molybdène et/ou du carbure de tungstène.

2. Ensemble de projection (100) selon la revendication 1, dans lequel la couche réfléchissante (9) est disposée sur la surface côté intérieure (IV) de la vitre intérieure (2) et est directement adjacente à l'environnement.

3. Ensemble de projection (100) selon la revendication 1 ou 2, dans lequel la couche réfléchissante (9) réfléchit au moins 5 %, de préférence au moins 6 %, et de manière particulièrement préférée au moins 10 % de la lumière polarisée p (7) dans une plage de longueurs d'onde comprise entre 450 nm et 650 nm incidente sur la couche réfléchissante (9).

4. Ensemble de projection (100) selon l'une des revendications 1 à 3, dans lequel la source lumineuse (8) pour la lumière polarisée p (7) est un écran, de préférence un écran LCD, un écran à LED, un écran OLED ou un écran électroluminescent, de préférence un écran LCD, et la lumière polarisée p (7) frappe de préférence la vitre composite (10) sous un angle d'incidence compris entre 55° et 80°, de préférence entre 62° et 77°.

5. Ensemble de projection (100) selon l'une des revendications 1 à 4, dans lequel la projection de la première sous-région (D) dans le plan de la deuxième sous-région (B) se situe entièrement à l'intérieur de la deuxième sous-région (B) en termes de surface.

6. Ensemble de projection (100) selon l'une des revendications 1 à 5, dans lequel au moins une couche de recouvrement opaque (5) est disposée au moins partiellement dans une zone périphérique (R) de la vitre composite (10).

7. Ensemble de projection (100) selon l'une des revendications 1 à 6, dans lequel au moins une couche de recouvrement opaque (5) sous la forme d'une impression de masquage opaque est disposée sur la surface côté intérieur (II) de la vitre extérieure (2) et/ou sur la surface côté extérieur (III) de la vitre intérieure (1).

8. Ensemble de projection (100) selon l'une des revendications 1 à 7, dans lequel la couche à base de carbure métallique (9.1) présente une épaisseur comprise entre 10 nm et 100 nm, de préférence entre 15 nm et 70 nm, et de manière particulièrement préférée entre 20 nm et 50 nm.

9. Ensemble de projection (100) selon l'une des revendications 1 à 8, dans lequel la couche réfléchissante (9) comprend au moins une couche diélectrique (9.2), qui est disposée au-dessus de la couche à base de carbure métallique (9.1).

10. Ensemble de projection (100) selon la revendication 9, dans lequel la couche diélectrique (9.2) est une couche à faible indice de réfraction optique, avec un indice de réfraction inférieur à 1,6.

11. Ensemble de projection (100) selon la revendication 10, dans lequel la couche diélectrique (9.2) comprend de l'oxyde de silicium, de préférence est constituée d'oxyde de silicium.

12. Ensemble de projection (100) selon l'une des revendications 8 à 11, dans lequel la couche diélectrique (9.2) présente une épaisseur comprise entre 50 nm et 200 nm, de préférence entre 100 nm et 150 nm.

13. Ensemble de projection (100) selon l'une des revendications 1 à 12, dans lequel le revêtement réfléchissant (9) comprend une couche protectrice organique (9.3), qui est disposée au-dessus de la couche à base de carbure métallique (9.1) ou de la couche diélectrique (9.2) et qui est directement adjacente à l'environnement.

14. Procédé de fabrication d'un ensemble de projection (100) selon l'une des revendications 1 à 13, dans lequel
a) on prévoit une vitre extérieure (1), une vitre intérieure (2) et une couche intermédiaire thermoplastique (3),
b) au moins une couche de recouvrement opaque (5) est appliquée dans au moins une deuxième sous-région (B) sur la surface côté extérieur (I) de la vitre extérieure (1), sur la surface côté intérieur (II) de la vitre extérieure (1), sur la surface côté extérieur (III) de la vitre intérieure (2), et/ou sur la surface côté intérieur (IV) de la vitre intérieure (2),
c) au moins la vitre intérieure (2), la couche intermédiaire thermoplastique (3) et la vitre extérieure (1) sont assemblées dans cet ordre pour former un empilement de couches,
d) l'empilement de couches composé d'au moins la vitre intérieure (2), la couche intermédiaire thermoplastique (3) et la vitre extérieure (1) est laminé pour former une vitre composite (10),
e) une couche réfléchissante (9) est appliquée sur au moins une première sous-région (D) de la surface côté intérieur (IV) de la vitre intérieure (2) et/ou de la surface côté extérieur de la vitre intérieure (2), et
f) une source lumineuse (8) émettant de la lumière polarisée p (7) est orientée par rapport a la vitre composite (10) de telle sorte que la lumière polarisée p (7) de la source lumineuse (8) puisse frapper la couche réfléchissante (9),
l'étape e) pouvant avoir lieu avant, pendant ou après les étapes a) à d), mais, s'il existe une couche de recouvrement opaque (5) sur la surface côté intérieur (IV) de la vitre intérieure (2), elle a lieu après l'application de cette couche de recouvrement opaque (5).
